# Europäisches Patentamt

# European Patent Office

# Office européen des brevets

(19)

(11) Numéro de publication: **0 169 142**
**B1**

# (12) FASCICULE DE BREVET EUROPÉEN

(45) Date de publication du fascicule du brevet:
**10.05.89**

(51) Int. Cl.⁴: **H 02 M 7/529**, H 02 M 5/45

(21) Numéro de dépôt: **85401427.1**

(22) Date de dépôt: **12.07.85**

(54) Convertisseur de fréquence statique de puissance.

(30) Priorité: **13.07.84 FR 8411182**

(43) Date de publication de la demande:
**22.01.86 Bulletin 86/4**

(45) Mention de la délivrance du brevet:
**10.05.89 Bulletin 89/19**

(84) Etats contractants désignés:
**AT BE CH DE FR GB IT LI LU NL SE**

(56) Documents cité:
**EP-A-0 081 275**
**EP-A-0 109 522**
**FR-A-2 325 233**
**GB-A-2 034 940**
**US-A-3 725 770**
**US-A-4 096 557**

(73) Titulaire: **SOCIETE D'APPLICATIONS DE LA PHYSIQUE MODERNE ET DE L'ELECTRONIQUE SAPHYMO- STEL, 29, avenue Carnot, F-91301 Massy (FR)**

(72) Inventeur: **Thouvenin, Jean- Marie, THOMSON- CSF SCPI 173, Bld Haussmann, F-75379 Paris Cedex 08 (FR)**

(74) Mandataire: **de Beaumont, Michel, 1bis, rue Champollion, F-38000 Grenoble (FR)**

LIBER, STOCKHOLM 1989

## Description

La présente invention se rapporte à un convertisseur de fréquence statique de puissance.

Les convertisseurs de fréquence actuels, du type à thyristors, sont peu souples d'emploi, en particulier en ce qui concerne leur démarrage lorsque la fréquence de sortie peut être amenée à varier dans un large rapport, par exemple de 1 à 3. En outre, dans les convertisseurs connus, lorsque le temps de polarisation inverse des thyristors est plus faible que leur "turn-off", ou bien lorsque la tension aux bornes des commutateurs est trop faible pour couper le courant de sortie, cela entraîne un défaut de blocage de ces thyristors et le court-circuit du commutateur de sortie.

On connaît d'après le document EP-A-109 522 un convertisseur à circuit de détermination du temps de polarisation inverse des thyristors du commutateur. Le fonctionnement de ce circuit fait appel à la détermination des passages par zéro de la tension de sortie et du courant de sortie du convertisseur, ce qui est satisfaisant en mode de fonctionnement normal du convertisseur, mais peut être dangereux en cas d'annulation d'une de ces grandeurs de sortie.

La présente invention a pour objet un convertisseur de fréquence statique de puissance pouvant suivre le plus rapidement et fidèlement possible des variations de paramètres de la charge, même lorsque la fréquence propre de la charge varie dans de larges proportions, et dans lequel le circuit de démarrage permette de mesurer à faible niveau et très rapidement la fréquence propre d'une charge du convertisseur, ce circuit de démarrage permettant également au convertisseur de fonctionner en mode impulsionnel, à basse fréquence par marche-arrêt du circuit de démarrage, en particulier en régime à basse puissance. En outre, le convertisseur de l'invention ne doit présenter pratiquement aucun risque de destruction des thyristors du commutateur de courant de sortie.

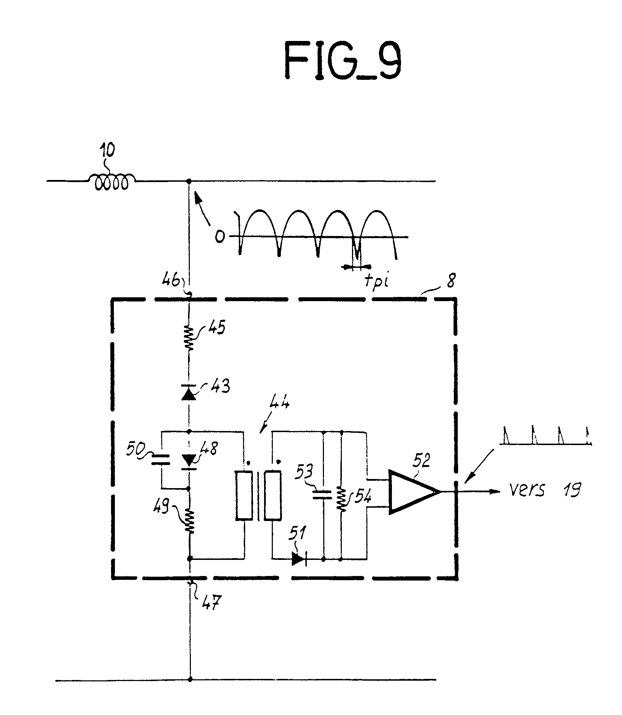

Le convertisseur de fréquence conforme à l'invention, du type comprenant un pont redresseur à semi-conducteurs commandés, relié par une inductance à un commutateur à semi-conducteurs commandés en montage en pont alimentant une charge constituée par un circuit résonant (2, 3), des dispositifs de mesure de la tension de sortie, du courant de sortie, du temps de polarisation inverse des redresseurs commandés du commutateur, de mesure du courant fourni par le redresseur, et un dispositif de détection des passages par zéro de la tension du secteur d'alimentation du convertisseur, ainsi qu'un circuit de démarrage et un calculateur central relié par des interfaces aux électrodes de commande des redresseurs commandés du redresseur et du commutateur et un circuit de traitement, caractérisé par le fait que le dispositif de mesure du temps de polarisation inverse des redresseurs commandés du commutateur est relié à l'entrée du commutateur et produit des signaux correspondant à la partie négative des impulsions qu'il reçoit (fig. 9).

La présente invention sera mieux comprise à la lecture de la description détaillée de plusieurs modes de réalisation de l'invention, pris comme exemples non limitatifs, et illustrés par le dessin annexé, sur lequel:

- la figure 1 est un bloc diagramme d'un convertisseur de fréquence conforme à l'invention;
- la figure 2 est une vue schématique d'un circuit de démarrage simplifié du convertisseur de la figure 1;
- les figures 3 et 4 sont des schémas d'un circuit de démarrage élaboré, et d'une variante de ce dernier, respectivement, du convertisseur de la figure 1;
- les figures 5 à 8 sont des chronogrammes de signaux apparaissant dans le convertisseur de la figure 1;
- la figure 9 est le schéma d'un mode de réalisation du détecteur de temps de polarisation inverse (tpi) des thyristors du commutateur du convertisseur de la figure 1;
- la figure 10 est le bloc diagramme d'un mode de réalisation d'un circuit de traitement fournissant certains signaux au calculateur central du convertisseur de la figure 1;
- la figure 11 est un bloc diagramme simplifié d'un mode de réalisation des circuits de commande des thyristors d'entrée du convertisseur de la figure 1;
- la figure 12 est un diagramme explicatif du fonctionnement des circuits de commande des thyristors d'entrée du convertisseur de la figure 1;
- la figure 13 est un schéma de principe expliquant le passage en "roue libre" des thyristors du redresseur du convertisseur de la figure 1;
- la figure 14 est un bloc diagramme simplifié d'un mode de réalisation des circuits de commande des thyristors du convertisseur de la figure 1;
- la figure 15 est un bloc diagramme d'un mode de réalisation des circuits de commande des thyristors de sortie du convertisseur de la figure 1;
- la figure 16 est un diagramme explicatif du fonctionnement du registre d'interfaçage des circuits de la figure 15, pour la fourniture de l'information de fréquence;
- la figure 17 est un diagramme du contenu d'un registre des circuits de la figure 15, pour des conditions particulières de fonctionnement;
- la figure 18 est un diagramme explicatif du fonctionnement de deux registres d'interfaçage des circuits de la figure 15, pour la fourniture de l'information de temps de polarisation inverse;
- la figure 19 est un chronogramme des impulsions au niveau du thyristor du circuit de démarrage et des thyristors du commutateur du convertisseur de la figure 1, pendant les deux phases de démarrage;
- les figures 20 et 21 sont des chronogrammes d'un cas normal et d'un cas particulier, respectivement, d'impulsions de mise en court-circuit du commutateur du convertisseur de la figure 1;
- la figure 22 est un diagramme de certains signaux apparaissant lors du changement de valeur du tpi dans le convertisseur de la figure 1, et
- la figure 23 est un réseau de deux courbes représentant respectivement l'allure des variations de tpi et t (délai d'allumage du pont de sortie du commutateur de la figure 1) en fonction de la frequence d'oscillation mesurée.

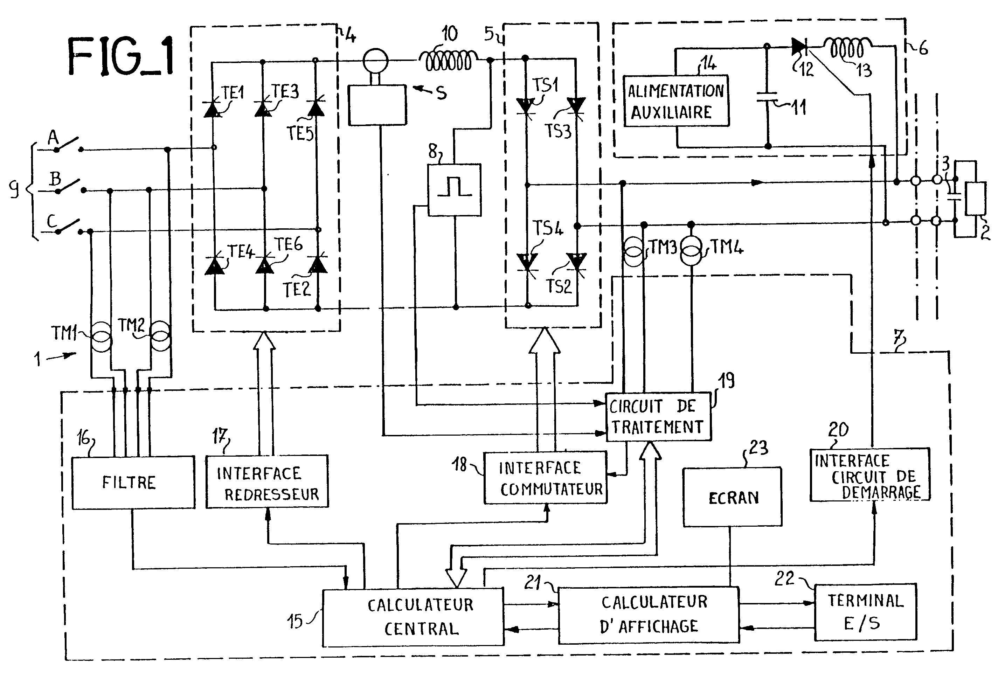

Le convertisseur de fréquence 1 dont le bloc diagramme est représenté sur la figure 1 est destiné à être utilisé avec un appareil de chauffage par induction dont la charge 2 présente une impédance inductive dont la valeur de l'impédance peut être variable dans de larges proportions. En parallèle avec cette charge inductive, on dispose, de façon connue en soi, une impédance capacitive 3 pour constituer un circuit oscillant. Toutefois, il est bien entendu que l'invention n'est pas limitée à une telle application, et qu'elle peut être mise en oeuvre dans la plupart des convertisseurs statiques, en particulier des convertisseurs de puissance, aussi bien du type à source de courant (avec une charge faisant partie d'un circuit oscillant parallèle comme dans l'exemple décrit ci-dessus) que du type à source de tension (circuit oscillant série).

Le convertisseur 1 comporte cinq parties principales: un redresseur d'entrée 4 à thyristors, un commutateur de sortie 5 à thyristors, un circuit de démarrage 6, un circuit de commande 7, et un ensemble d'appareils d'interfaçage entre les circuits de puissance et les circuits de commande, comprenant des transformateurs de mesure TM1 à TM4, une sonde de courant 5, par exemple à effet Hall, un circuit 8 détecteur de temps de polarisation inverse, représenté plus en détail sur la figure 9, et des transformateurs d'allumage des thyristors, non représentés sur la figure 1.

L'entrée du redresseur 4 est reliée à un réseau électrique d'alimentation 9. Dans le cas où, comme représenté sur la figure 1, le réseau 9 est triphasé, le redresseur 4 comporte six thyristors TE1 à TE6 branchés en pont redresseur triphasé classique, et sinon le redresseur 4 comporte un nombre de thyristors approprié.

Le redresseur 4 est relié au commutateur 5 par une inductance de lissage série 10. Le commutateur 5 comporte quatre thyristors TS1 à TS4 montés de façon classique en pont commandé, dont la sortie est reliée à la charge 2.

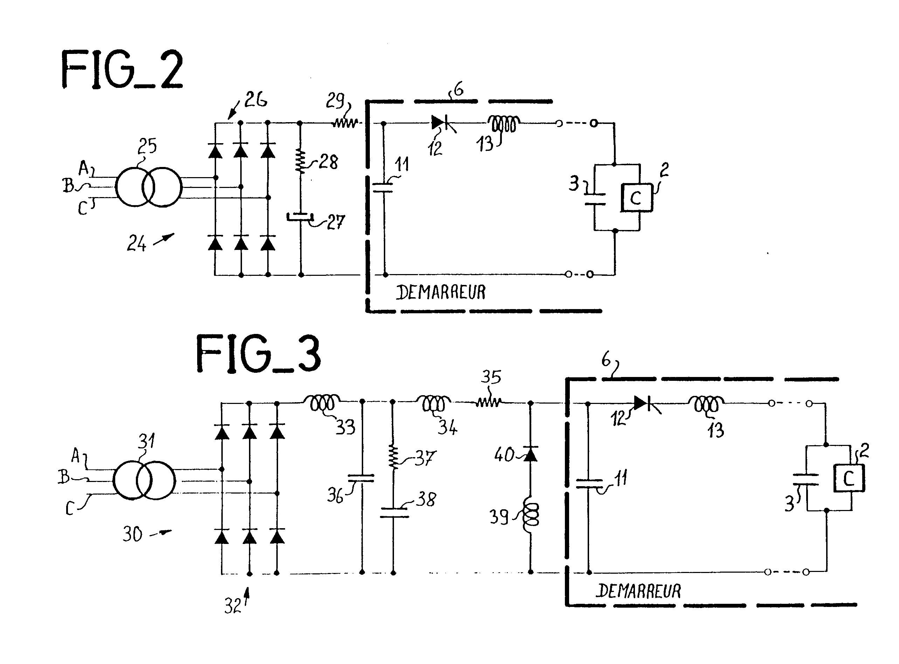

Le circuit de démarrage 6, décrit plus en détail ci-dessous en référence aux figures 2 à 4, comporte essentiellement un circuit série branché aux bornes de sortie du commutateur, et constitué d'un condensateur 11, d'un thyristor 12 et d'une inductance 13, un circuit d'alimentation auxiliaire 14 étant branché aux bornes du condensateur 11.

Le circuit de commande 7 comporte un calculateur central 15, par exemple un microprocesseur de type 6809. Ce calculateur est relié: à la sortie d'un circuit de filtrage et de détection de passages à zéro 16, à l'entrée d'une interface 17 de commande du redresseur, à l'entrée d'une interface 18 de commande du commutateur, à un circuit de traitement 19, et à l'entrée d'une interface 20 de commande du circuit de démarrage. D'autre part, le calculateur est relié bidirectionnellement, de préférence via une liaison RS232, à un calculateur asservi d'affichage 21 lui-même relié bidirectionnellement à un terminal d'entrée-sortie 22. Le calculateur 21, par exemple un microprocesseur 6809 est relié à un dispositif d'affichage approprié 23, par exemple, un moniteur de télévision.

Les transformateurs de mesure TM1 et TM2 sont reliés chacun à un couple de phases du réseau d'alimentation secteur, par exemple les couples (B, C) et (A, B) respectivement. Leurs sorties sont reliées au filtre 16, qui est un filtre passe-bande dont la bande passante va de 47 à 63 Hz par exemple.

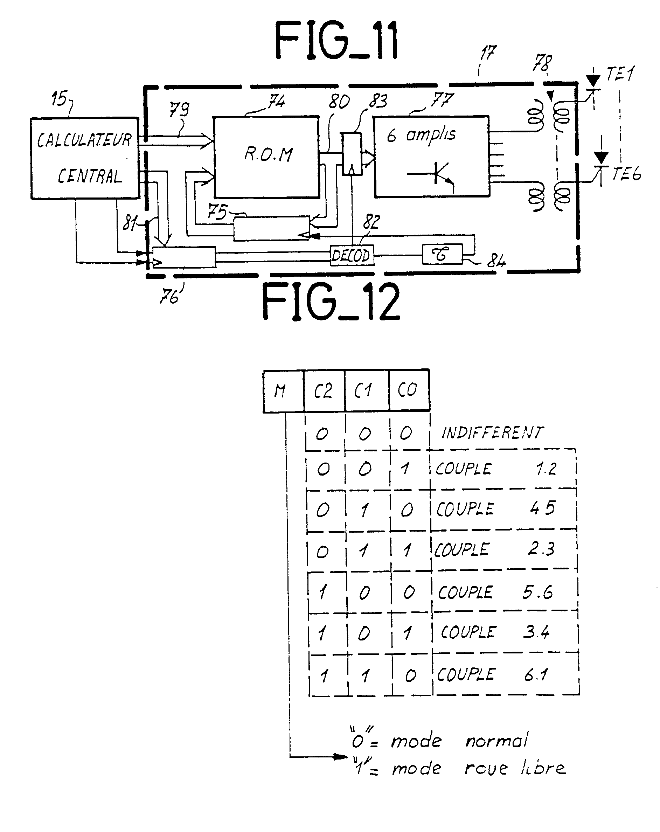

Les sorties de l'interface 17 sont reliées, de façon non representée, aux gâchettes des thyristors TE1 à TE6 pour commander leur allumage par paires de la façon expliquée ci-dessous en référence aux figures 11 à 13.

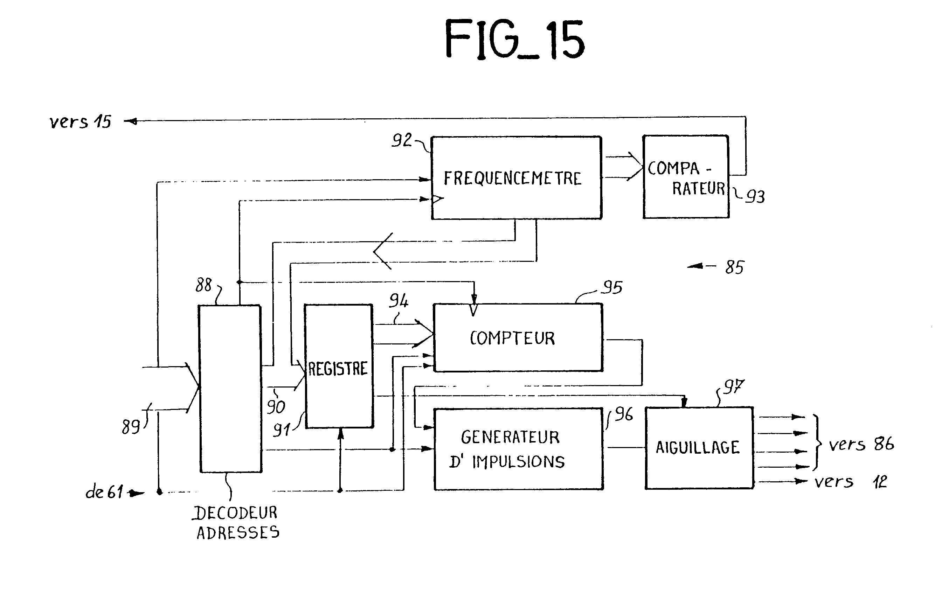

L'interface 18, représentée plus en détail sur la figure 15, est reliée, de façon connue en soi et non représentée sur le dessin, aux gâchettes des thyristors du commutateur 5. Cette interface est également reliée à une sortie du circuit 19.

La sortie de l'interface de circuit de démarrage 20 est reliée à la gâchette du thyristor 12.

La sonde S, par exemple un capteur de marque LEM, est reliée au circuit 19, ainsi que la sortie du circuit 8.

Le circuit 14 d'alimentation auxiliaire du circuit de démarrage peut par exemple être réalisé comme indiqué sur l'une des figures 2 à 4.

Le circuit d'alimentation auxiliaire 24 de la figure 2 comprend un transformateur triphasé d'isolement galvanique 25 relié au secteur triphasé alimentant le convertisseur 1. Le transformateur 25 alimente un pont redresseur triphasé classique 26. En parallèle sur la sortie du pont 26, on branche un circuit série comportant un condensateur 27 et une résistance 28. La sortie du pont 26 est reliée via une résistance série 29 à l'entrée du circuit de démarrage 6, cette entrée étant reliée aux bornes du condensateur 11. Cette alimentation 24, isolée, par le transformateur 25, du circuit de puissance principal, présente de faibles pertes, la résistance 29 pouvant être de valeur relativement élevée. Du fait que la constante de temps du circuit 29 - 11 est alors élevée, ce qui nécessite un temps relativement long pour la recharge du condensateur 11, cette alimentation 24 sera surtout utilisée dans le cas d'une exploitation à démarrages peu fréquents.

L'alimentation 30 de la figure 3 est également isolée du circuit de puissance principal par un transformateur 31 alimentant un pont redresseur 32. La borne de sortie positive de ce pont est reliée au point commun du condensateur 11 et du thryristor 12 du démarreur via un circuit série comportant respectivement une inductance 33, une autre inductance 34 et une résistance 35. La borne de sortie négative du pont 32 est directement reliée à l'autre électrode du condensateur 11. Le point commun des inductances 33 et 34 est relié à la borne négative du pont 32 par un condensateur 36 en parallèle avec un circuit série comprenant une resistance 37 et un autre condensateur 38. En parallèle sur le condensateur 11, on branche un circuit série comprenant une inductance 39 et une diode 40 dont la cathode est reliée à l'inductance 35. Dans l'alimentation 30 décrite ci-dessus, la résistance 35 a une faible valeur, beaucoup plus faible que celle de la résistance 29. Dans ce cas, la constante de temps du circuit de charge du condensateur 11 est beaucoup plus faible que pour l'alimentation 24, ce qui autorise une utilisation intensive de l'alimentation (démarrages fréquents, par exemple fonctionnement en mode impulsionnel), mais en contrepartie, la consommation en énergie est plus importante qu'avec l'alimentation 24.

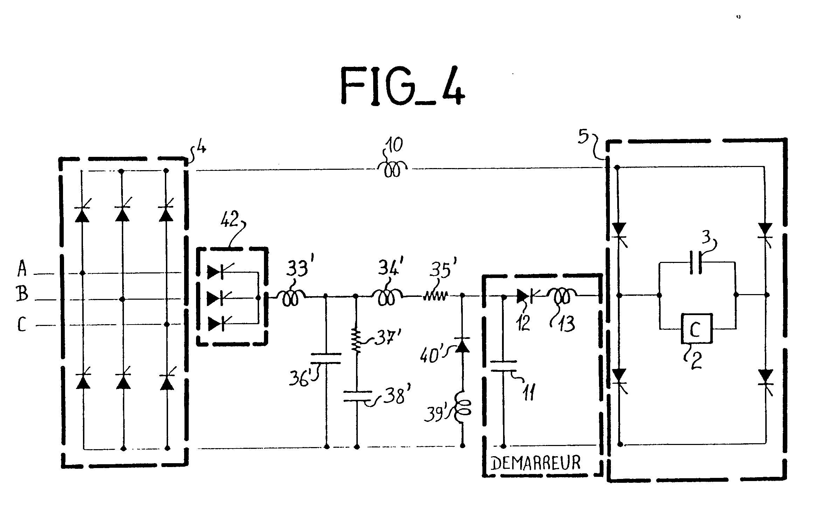

L'alimentation 41 représentée sur la figure 4 représente un cas particulier de l'alimentation 30 de la figure 3, à savoir avec non-isolement du circuit de démarrage par rapport au circuit principal. Sur cette figure 4, on a représenté le pont redresseur commandé 4 relié par la bobine 10 au commutateur 5, la charge 2, avec son condensateur parallèle 3, étant branchée, comme précédemment, à la sortie du commutateur 5.

On relie aux fils de phase A, B, C du secteur d'alimentation, un redresseur 42 comportant trois semi-conducteurs, de préférence des thyristors commandés (via un circuit d'interface similaire au circuit 17 de la figure 1) par le calculateur central 15, de façon analogue à la façon dont sont commandés les thyristors du pont 4. La sortie du redresseur 42 est reliée aux bornes du condensateur 11 par un circuit identique à celui reliant la sortie du pont 32 au condensateur 11 dans l'alimentation 30, et comportant les éléments 33' à 40' respectivement identiques aux éléments 33 à 40. Bien entendu, le calculateur central commande les thyristors du commutateur 5 de façon que le thyristor en parallèle sur lequel est branché le circuit de démarrage ne vienne pas le court-circuiter au démarrage.

Le circuit détecteur 8 a été représenté en détail sur la figure 9. Le circuit 8 comporte essentiellement un redresseur 43 suivi d'un tranformateur d'impulsions 44. Le redresseur 43, de préférence une diode très rapide, est disposé en série avec l'enroulement primaire du transformateur 44 et une résistance de protection et d'adaptation 45 entre les bornes d'entrée positive et négative 46, 47 respectivement du circuit 8, la cathode de la diode 43 étant du côté de la borne positive. En parallèle sur l'enroulement primaire du transformateur 44, on branche une diode 48 en série avec une résistance 49, un condensateur de protection 50 étant en parallèle avec la diode 48, dont la cathode est du côté de la borne négative 47. Les éléments 48, 49 permettent la démagnétisation du transformateur 44 après le passage de chaque impulsion.

Le secondaire du transformateur 44 est relié, via une diode 51, montée en sens passant vis-à-vis des impulsions négatives, à l'entrée d'un amplificateur opérationnel 52, un condensateur 53 et une résistance 54 étant en parallèle sur cette entrée. La diode 51 impose la démagnétisation du transformateur 44 par son primaire. Ainsi, on recueille à la sortie de l'amplificateur 52 des impulsions correspondant à la partie négative des impulsions arrivant à l'entrée du circuit détecteur 8, partie négative dont la durée est le temps de polarisation inverse $t_{pi}$ des thyristors du commutateur 5.

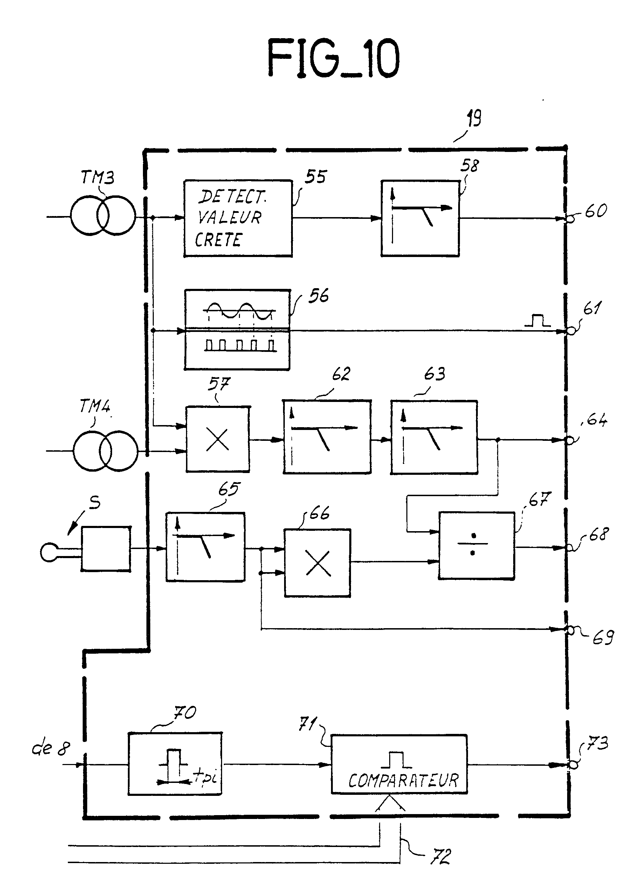

On a représenté sur la figure 10 le bloc diagramme du circuit de traitement 19 qui reçoit des informations provenant des transformateurs de mesure TM3 et TM4 ainsi que la sonde 5 et du circuit détecteur 8.

La sortie du transformateur TM3 est reliée à un détecteur de valeur de crête 55, à un circuit redresseur et détecteur de passage par zéro 56, et à une première entrée d'un multiplicateur 57 dont la seconde entrée est reliée à la sortie du transformateur TM4.

La sortie du détecteur 55 est reliée par un filtre passe-bas 58, qui a avantageusement une fréquence de coupure de 200 Hz environ, à une borne de sortie 60. La sortie du détecteur 56 est reliée à une borne de sortie 61. La sortie du multiplicateur 57 est reliée à un dispositif de filtrage comprenant, dans le cas où l'on utilise des filtres numériques tels que des filtres à capacités commutées, deux filtres passe-bas 62, 63 disposés en cascade, à une borne de sortie 64. La fréquence de coupure du premier filtre est supérieure à celle du second, ces fréquences étant avantageusement de 1000 et 200 Hz environ, ce qui permet d'éliminer les harmoniques du signal de sortie du multiplicateur 57, sans pour autant pratiquement éliminer les parties négatives de ce signal (dont la durée peut être faible vis-à-vis de la période de ce signal, mais dont l'amplitude peut influer sur la valeur moyenne de ce signal). Si l'on utilisait des filtres analogiques, un seul suffirait, avec une fréquence de coupure d'environ 200 Hz.

La sortie du capteur 5 est reliée via un filtre passe-bas 65, ayant une fréquence de coupure d'environ 200 Hz, à un élévateur au carré 66, qui peut être réalisé soit à l'aide d'un multiplicateur (dont on réunit les deux entrés), soit à l'aide d'une mémoire morte. La sortie du circuit 66 est reliée à l'entrée de diviseur d'un circuit de division 67, dont l'entrée de dividende est reliée a la sortie du circuit 63, et dont la sortie est reliée à une borne de sortie 68. La sortie du filtre 65 est également reliée à une borne de sortie 69. On notera que l'on pourrait se contenter du capteur TM4, mais en cas de défaillance du commutateur 5, on ne peut alors avoir d'indication du courant de sortie du redresseur 4, et le calculateur central peut ne pas réagir de façon appropriée.

La sortie du circuit 8 est reliée à l'entrée d'un circuit 70 de mise en forme d'impulsions et de comptage. Ce circuit 70 convertit les impulsions de sortie du circuit 8 en impulsions rectangulaires, et il fournit en sortie un signal représentant la largeur de ces impulsions (c'est-à-dire la durée du temps tpi) de façon classique, par exemple par comptage. La sortie du circuit 70 est reliée à une entrée d'un circuit comparateur 71 dont l'autre entrée est reliée à un bus 72 du calculateur central 15. Le calculateur central envoie sur ce bus la valeur minimale de tpi qui est comparée à la valeur mesurée provenant du circuit 70. La sortie du comparateur 71 est reliée à une borne 73.

Les bornés de sortie 60, 61, 64, 68, 69 et 73 du circuit 19 sont reliées, de façon non représentée, au calculateur central. Il est bien entendu que le niveau des signaux apparaissant sur ces sorties est compatible avec les valeurs acceptables par le calculateur central.

Le signal apparaissant sur la sortie 60 est l'enveloppe filtrée du signal de sortie crête redressé du convertisseur. Le filtre 58 élimine les harmoniques indésirables, en particulier l'harmonique à la fréquence sextuple de la fréquence du réseau triphasé 9 (à cause du redressement par le pont triphasé 4). Ce signal sur la sortie 60 est comparé par le calculateur central 15 à une valeur de consigne fixe ou variant en fonction d'un phénomène extérieur, ou d'une commande provenant par exemple du terminal 22.

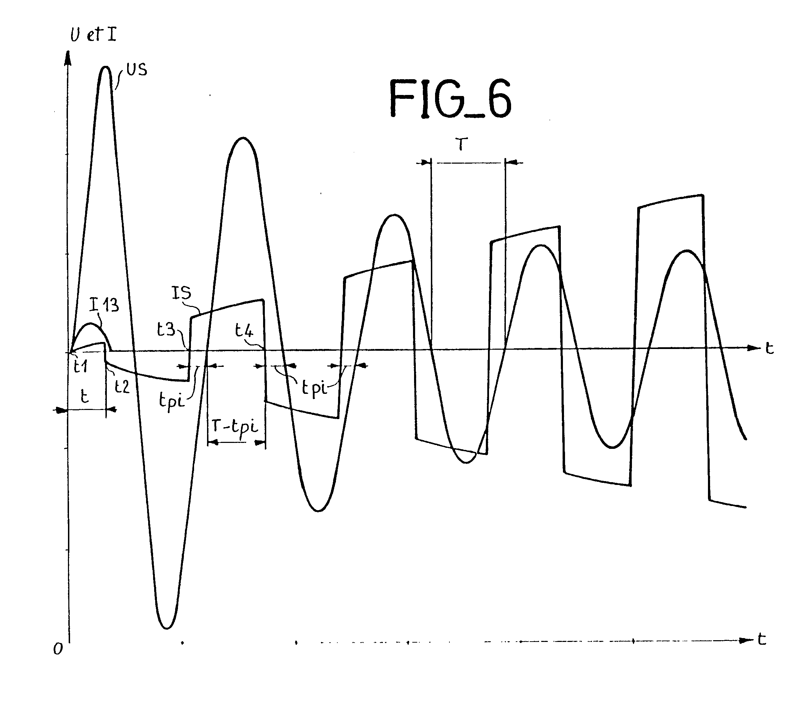

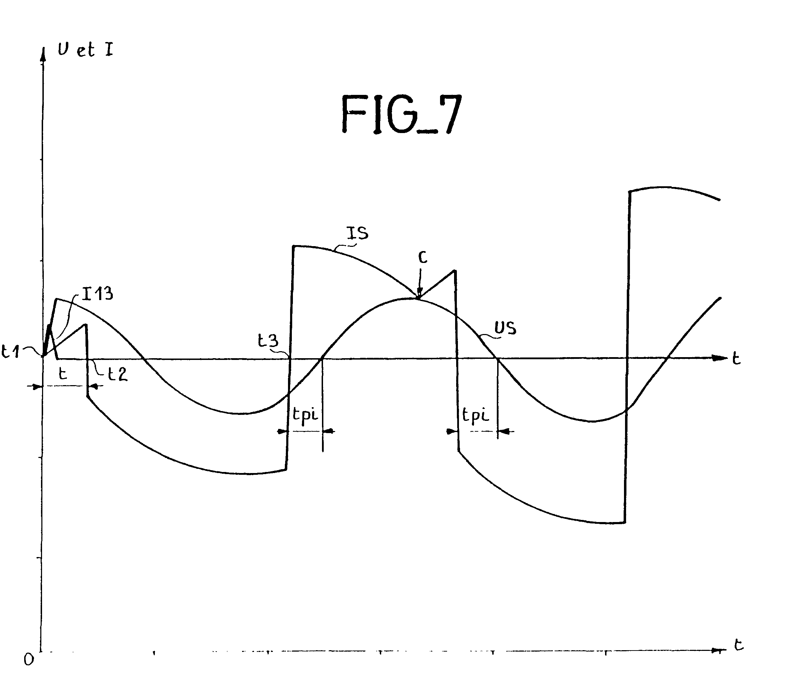

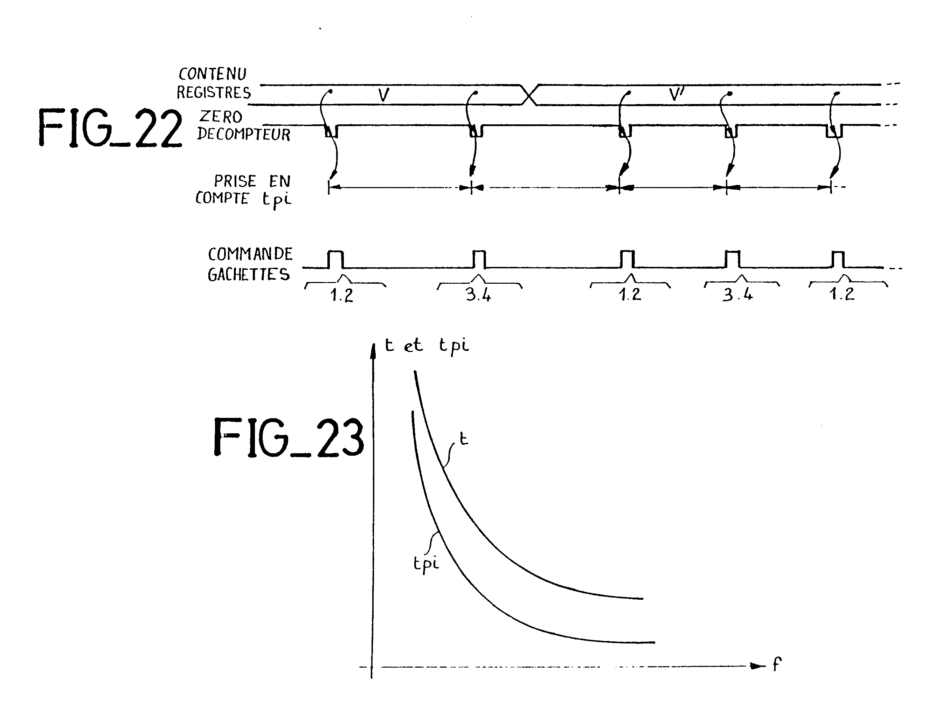

Les impulsions apparaissant sur la sortie 61 permettent de mesurer la fréquence de la tension de sortie du convertisseur de façon classique à l'aide d'un compteur. La valeur de cette fréquence permet de déterminer la valeur de tpi optimale correspondante, par simple lecture d'une table de correspondance établie auparavant par expérimentation. La courbe donnant la valeur de tpi en fonction de la fréquence a l'allure sensiblement hyperbolique, comme représenté sur la figure 23. Cette table de correspondance peut être mémorisée dans le calculateur central 15 (qui commande, en fonction de la valeur de tpi ainsi déterminée, l'allumage des thyristors du commutateur 5, comme on le verra ci-dessous en référence aux figures 6 et 7 en particulier.

La valeur de la puissance de sortie moyenne, disponible sur la borne 64, sert à la régulation de la puissance fournie par le convertisseur à la charge 2. Cette valeur de puissance de sortie est comparée par le calculateur central 15 à une valeur de consigne fixe ou variable, tout comme dans le cas de la régulation de tension de sortie.

La sonde 5 fournit une valeur égale, à un facteur de proportionnalité près, au courant Id traversant l'inductance de filtrage 10. A la sortie du filtre 65, on obient la valeur moyenne glissante de ce courant, disponible sur la borne 69, pour être affiché, et, le cas échéant, pour réguler le courant fourni par le convertisseur, de la même façon que pour réguler la tension de sortie, comme expose ci-dessus.

En divisant la valeur de la puissance de sortie par le carré du courant Id, on obtient, à la valeur des pertes du commutateur près, la valeur de la résistance équivalente en continu du circuit de charge du convertisseur. Si cette résistance équivalente passe en-dessous d'une valeur minimale (déterminée expérimentalement) mémorisée dans le calculateur central 15, la tension de sortie du convertisseur ne suffit plus à assurer l'extinction des thyristors du commutateur 5 (le courant de sortie étant supposé inchangé, la diminution de la résistance équivalente signifie la diminution de la tension de sortie). Le calculateur central choisit un temps tpi plus grand que celui donné par ladite table de conversion, ce qui entraîne l'augmentation de la tension de sortie donc un mode de fonctionnement dégradé du convertisseur (rendement réduit), mais garantit l'extinction des thyristors d'une diagonale du commutateur avant l'allumage des thyristors de l'autre diagonale. Un tel fonctionnement est alors signalé sur l'afficheur 23 et peut, le cas échéant, déclencher une alarme et/ou modifier la valeur de la capacite du condensateur 3 branché en parallèle sur la charge 2. Bien entendu, si la valeur de la résistance équivalente tombe en-dessous d'une valeur minimale, le calculateur central peut aussi commander la disjonction du convertisseur. Cette valeur de résistance équivalente reflète la qualité de l'adaptation en puissance de la charge au convertisseur, et peut être affichée en permanence sur l'afficheur 23 soit sous forme numérique, soit sous une forme graphique appropriée. De plus, la connaissance de cette valeur permet d'optimiser la régulation de puissance et/ou de tension.

Lorsque la valeur du tpi des thyristors du commutateur 5 passe en-dessous d'une valeur minimale permise pour le cas de fonctionnement en cours (cette valeur minimale peut évoluer en fonction de la fréquence du circuit oscillant 2, 3 qui peut varier pendant le fonctionnement), le comparateur 71 envoie un signal correspondant au calculateur central 15 qui commande la disjonction du convertisseur. Selon une variante de réalisation, le calculateur central 15 peut assurer lui-même la fonction du comparateur 71 qui est alors supprimé. La connaissance de la valeur instantanée de tpi est importante du fait que lorsqu'elle a tendance à être plus faible que le turn-off des thyristors, ces derniers peuvent ne pas se bloquer, et le commutateur 5 se met alors en court-circuit. Ce cas de défaut peut se présenter également si la tension aux bornes du commutateur est trop faible pour couper le courant de sortie.

Bien entendu, si les circuits faisant partie du circuit de traitement 19 représenté sur la figure 10 sont de type analogique, les signaux se présentant sur toutes les bornes de sortie du circuit 19 doivent être numérisés pour être envoyés au calculateur central 15. Dans le cas contraire, les signaux issus de TM3, TM4, S et 8 sont numérisés avant d'être envoyés au circuit 19.

L'interface 17 représentée sur la figure 1 comprend essentiellement une mémoire 74, un registre 75, un compteur 76 fonctionnant en décompteur, un ensemble 77 de six amplificateurs identiques de commande de thyristors, et un ensemble 78 de six transformateurs d'impulsions reliés de façon classique, d'une part aux sorties des amplificateurs 77, et d'autre part aux gâchettes des thyristors TE1 à TE6 du redresseur 4.

Le calculateur central 15 est relié par un bus d'adressage 79 à une partie des entrées d'adressage de la mémoire 74. Chacun des fils du bus de sortie 80 à six fils de la mémoire 74 est relié à une entrée de commande d'un amplificateur correspondant du groupe 77. Le bus 80 est également relié, via le registre 75, à une autre partie des entrées d'adressage de la mémoire 74.

Le calculateur 15 est relié par un bus 81 aux entrées de positionnement du compteur 76 dont les sorties d'états de comptage sont reliées à un décodeur d'état zéro 82. La sortie du décodeur 82 est reliée à l'entrée d'horloge d'un registre 83 interposé sur le bus 80 juste avant l'entrée du groupe 77. La sortie du décodeur 82 est également reliée, via un circuit de retard 84, à l'entrée de signaux d'horloge du registre 75. Le calculateur 15 est également relié à une entrée d'inhibition du compteur 76, et une sortie de signaux d'horloge du calculateur est reliée à l'entrée d'horloge du compteur 76.

Au démarrage du convertisseur, le cas échéant après mesure de la fréquence propre du circuit 2, 3 de la façon indiquée ci-dessous, le calculateur 15 détermine, en fonction de la phase instantanée du réseau d'alimentation 9, quel couple de thyristors il va allumer au prochain passage à zéro de la tension du réseau, et simultanément, il envoie sur le bus 81 un mot qui est fonction de la puissance que doit fournir le convertisseur. Cette puissance est déterminée par l'angle d'amorçage des thyristors du redresseur 4. La valeur de la puissance initiale peut par exemple être introduite par l'opérateur grâce au terminal 22. Ledit mot envoyé sur le bus 81 positionne le décompteur 76 qui décompte, au rythme des signaux d'horloge qu'il reçoit, et dès qu'il atteint l'état zéro, décodé par le décodeur 82, le signal de sortie de la mémoire 74 (commande d'allumage de deux des thyristors du redresseur 4) parvient aux entrées de commande des amplificateurs correspondants du groupe 77 qui appliquent, par l'intermédiaire des deux transformateurs correspondants du groupe 78, les tensions d'allumage sur les deux thyristors à allumer.

On a représenté sur la figure 12 un exemple de mot que le calculateur 15 peut envoyer sur le bus 79, qui comporte quatre fils dans le cas présent. Un des fils est référencé M, et commande le mode normal ou le mode roue libre. En mode normal, ce fil est par exemple au niveau zéro. Les trois autres fils, référencés C0, C1, C2 indiquent quel couple de thyristors doit être allumé au démarrage, après le prochain passage par zéro de la tension du secteur d'alimentation avec un angle d'amorçage déterminé par le calculateur 15. On a indiqué sur la figure 12 un des nombreux exemples de codage des trois différents couples de thyristors du redresseur 4. Le code "000" signifie par exemple qu'aucun couple de thyristors n'est forcé à l'allumage par le calculateur 15, ce qui se produit soit lorsque le redresseur 4 n'est pas encore en fonctionnement, soit après le demarrage lorsque le calculateur "passe le relais" au circuit séquenceur constitué notamment par la mémoire 74 et le registre 75.

Ce circuit séquenceur, connu en soi par exemple d'après l'article des pages 154 à 157 de la revue Computer Design d'avril 1978, fonctionne de la façon suivante: au démarrage, le calculateur a déterminé qu'il faudra allumer après le prochain passage par zéro de la tension du secteur d'alimentation le couple de thyristors (TE1, TE2) (noté en abrégé "couple 1.2" sur la figure 12), et il envoie simultanément au compteur 76 un mot correspondant à l'angle d'allumage. Dès ce passage par zéro, le calculateur 15 active le compteur 76 qui se met à décompter. Simultanément, le signal de sortie de la mémoire 74, qui indique que les thyristors TE1 et TE2 devront être allumés, est présent à l'entrée du registre 83 et à l'entrée du registre 75. Dès l'arrivée à zero du compteur 76, le décodeur 82 envoie un signal d'horloge au registre 83 qui active ainsi les amplificateurs de 77 correspondant aux thyristors TE1 et TE2 qui sont alors allumés. Après un léger temps de retard dû à 84 (suffisant pour assurer la prise en compte du signal de sortie de la mémoire 74 par le registre 83), le registre 75 prend en compte le signal de sortie de la mémoire 74 (qui correspond pour l'instant à l'allumage de TE1 - TE2).

La mémoire 74 est programmée de telle façon que lorsqu'elle reçoit sur ses entrées d'adressage reliées au registre 75 un mot d'adressage correspondant à l'allumage d'un couple de thyristors, elle fournit en sortie un mot correspondant à l'allumage du couple de thyristors suivant, dans l'ordre d'allumage. Cet ordre est, de façon classique, le suivant (les couples étant simplement représentés par les numéros d'indice des thyristors, à savoir 1, 2 pour le couple TE1-TE2, etc...): (1, 2), (2, 3), (3, 4), (4, 5). (5; 6), (6, 1), (1, 2), etc...

Aussitôt après la première prise en compte du mot de sortie de la mémoire 74 par le registre 83. le signal envoyé par le calculateur central sur le bus 79 passe à "0000", indiquant par là que le mode normal continue à être en vigueur et que le séquenceur 74 - 75 peut continuer seul la procédure d'allumage du redresseur 4, ce qui libère le calculateur 15 de la tâche d'indiquer l'ordre d'allumage des thyristors du redresseur.

Dès que le compteur 76 arrive à zéro, il s'arrête, soit par inhibition par le calculateur 15, soit par arrêt d'envoi d'impulsions d'horloge.

Au passage par zéro suivant de la tension du secteur d'alimentation, le compteur 76 est débloqué, et la mémoire 74 indique qu'il faudra allumer ensuite le couple de thyristors TE2, TE3, et le cycle d'allumage des thyristors du redresseur 4 se poursuivra dans l'ordre d'allumage indiqué ci-dessus.

En cours de fonctionnement normal du redresseur 4, le calculateur peut intervenir pour modifier le mot envoyé au compteur 76, c'est-à-dire pour réguler la puissance ou la tension de sortie.

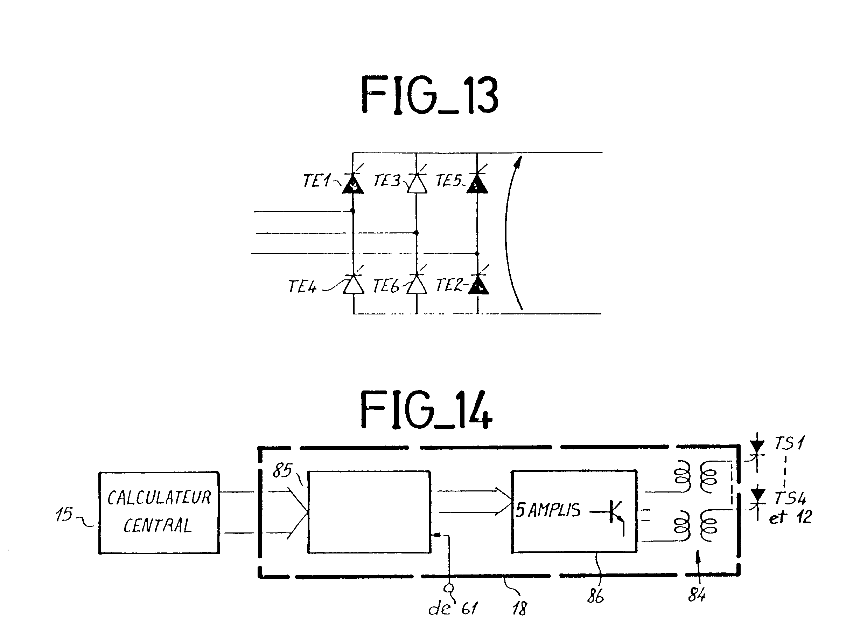

Lorsqu'il se produit une demande de roue libre, par exemple à la suite d'un défaut de surtension secteur lors d'une récupération d'énergie, le calculateur envoie un "1" sur le fil "M" du bus 79. La mémoire 74 est programmée de façon qu'à l'apparition d'un "1" sur le fil "M", son mot de sortie soit le même, et qu'en plus il y ait changement d'un autre élément binaire correspondant à l'allumage d'un autre thyristor de l'une des branches du pont comportant un thyristor déjà allumé. On a représenté sur la figure 13 ce qui se produit alors au niveau des thyristors du redresseur 4, les thyristors allumés étant noircis. Dans l'exemple de la figure 13, on suppose que l'ordre de roue libre arrive juste après l'allumage des thyristors TE1 et TE2. Le mot de sortie de la mémoire 74, à l'apparition d'un "1" sur ledit fil "M" ne change pas en ce qui concerne la commande des thyristors TE1 et TE2, mais en plus, la commande du thyristor TE5 (qui se trouve dans la même branche que TE2) est activée. Bien entendu, on pourrait activer TE4 (qui est dans la même branche que TE1) au lieu de TE5. Dès que le compteur 76 arrive à l'état zéro, le mot de sortie de la mémoire 74 est pris en compte par le registre 83, et le thyristor TE5 est activé, le compteur 76 étant alors inhibé.

Dès la fin du phénomène ayant provoqué le mode roue libre, le calculateur 15 détermine quel couple de thyristors du redresseur 4 devra être allumé après le prochain passage par zéro de la tension du secteur d'alimentation, et envoie sur les fils C0 à C2 du bus 79 un mot correspondant, le fil "M" recevant alors un "0". Le même processus qu'au démarrage a alors lieu, de la façon expliquée ci-dessus.

La programmation de la mémoire 74 en vue d'obtenir les processus décrits ci-dessus est évidente pour l'homme de l'art à la lecture de la description qui vient d'être faite, et ne sera donc pas décrite plus en détail.

L'interface 17 telle que décrite ci-dessus à titre d'exemple peut être conformée différemment, certains de ses éléments pouvant être remplacés par d'autres éléments assurant les mêmes fonctions, ou pouvant être intégrés au calculateur central 15, en particulier les éléments 76, 82, 84 et même la mémoire 74. Dans le cas où le redresseur 4 comporte un nombre différent de thyristors, par exemple 12 ou 24, les circuits 74, 77 et 78 sont modifiés en conséquence, de manière évidente pour l'homme de l'art à la lecture de la présente description.

Sur le bloc diagramme simplifié de la figure 14 on a représenté l'interface 18 de commande des thyristors TS1 à TS4 du commutateur 5, commandée par le calculateur central 15. L'interface 18 comprend un circuit de commande 85, représenté plus en détail à la figure 15, un groupe 86 de cinq amplificateurs identiques, et un ensemble 87 de cinq transformateurs d'impulsions reliés d'une part aux sorties des amplificateurs 86, et d'autre part aux gâchettes des thyristors TS1 à TS4 et du thyristor 12.

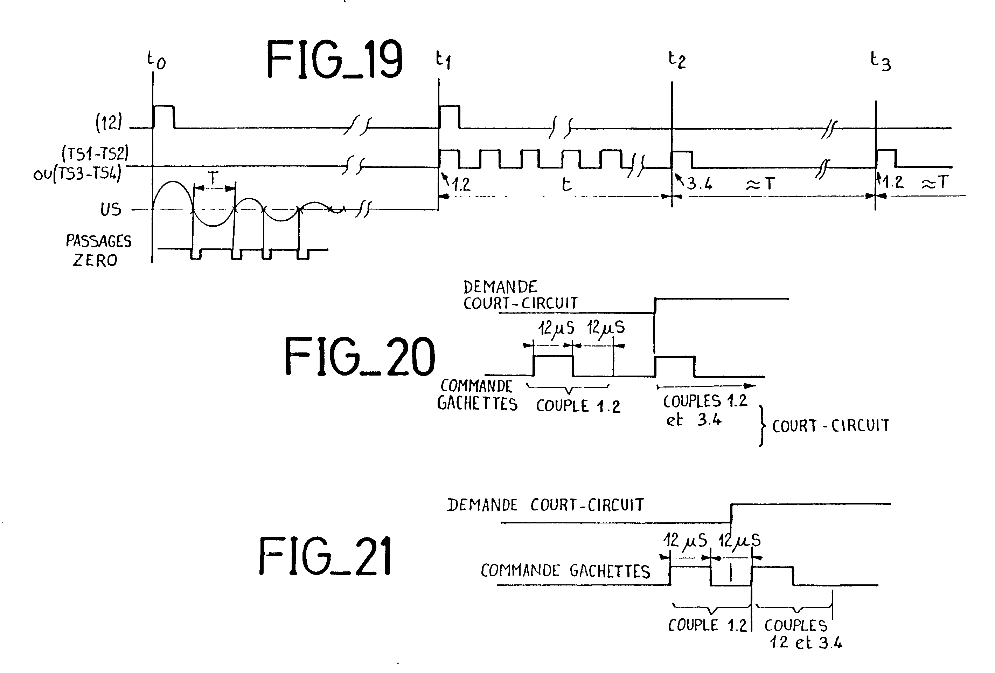

Le circuit 85 comporte, à l'entrée, un circuit 88 de décodage d'adresses comportant essentiellement un circuit de type LS139 relié au bus 89 venant du calculateur central 15. Sur ce bus 89 arrivent en particulier des informations comprenant la valeur tpi, le mode de fonctionnement du commutateur 5 (normal ou court-circuit), le mode de démarrage (décrit ci-dessous en référence à la figure 19), les numéros des thyristors à allumer, et la fréquence d'horloge.

La sortie du décodeur 88 est reliée par une partie d'un bus 90 à l'entrée d'un registre 91, qui est relié d'autre part, par l'autre partie du bus 90, à la sortie d'un fréquencemètre 92. Le fréquencemètre 92 reçoit sur son entrée de comptage les impulsions correspondant aux passages à zéro de la tension de sortie du convertisseur, et il reçoit d'autre part le signal d'horloge provenant du calculateur central 15, ce qui lui permet de fournir sur le bus 90 la valeur de la fréquence de la tension de sortie du convertisseur. L'information de sortie du fréquencemètre est également envoyée à un comparateur 93 qui la compare à une valeur minimale et à une valeur maximale, soit mémorisées dans le comparateur, soit transmises par le calculateur central. Si la fréquence mesurée est en-dehors des limites permises, le comparateur 93 le signale au calculateur central qui peut arrêter le convertisseur.

Le registre 91 transmet sur son bus de sortie 94 à un compteur 95 la valeur de tpi déterminée par le calculateur central 15. Le compteur 95, fonctionnant en décompteur, détermine, tout comme le compteur 76 de l'interface 17, l'instant d'amorçage des thyristors du commutateur 5 à partir des passages à zéro de la tension de sortie du convertisseur, de la façon expliquée ci-dessous en référence aux figures 6 et 7, et ce compteur reçoit également des impulsions d'horloge provenant du générateur d'horloge du calculateur central.

Lorsque le compteur 95 arrive à zéro, il envoie un ordre à un générateur d'impulsions 96 qui envoie les impulsions d'amorçage appropriées aux thyristors du commutateur et au thyristor 12 via un circuit d'aiguillage 97 commandé par le calculateur central 15 par l'intermédiaire des circuits 88 et 91. Ce circuit d'aiguillage est de type classique, comportant des commutateurs électroniques commandés sélectivement par les ordres reçus du calculateur central, et éventuellement décodés. Le calculateur central commande, via le circuit 88, par une ligne 98, l'écriture de la valeur du tpi dans le compteur 95 et le générateur 96.

Dans le mode de réalisation de la figure 15, l'interface 85 commande, outre les thyristors TS1 à TS4 du commutateur 5, le thyristor 12 du circuit de démarrage. Selon une variante, représentée sur la figure 1, le circuit de commande du thyristor 12 peut être distinct de l'interface 18, et l'on a alors une interface spécifique au circuit de démarrage, référencée 20, qui comporte essentiellement un générateur d'impulsions commandé par le calculateur central, et un amplificateur avec son transformateur d'impulsions.

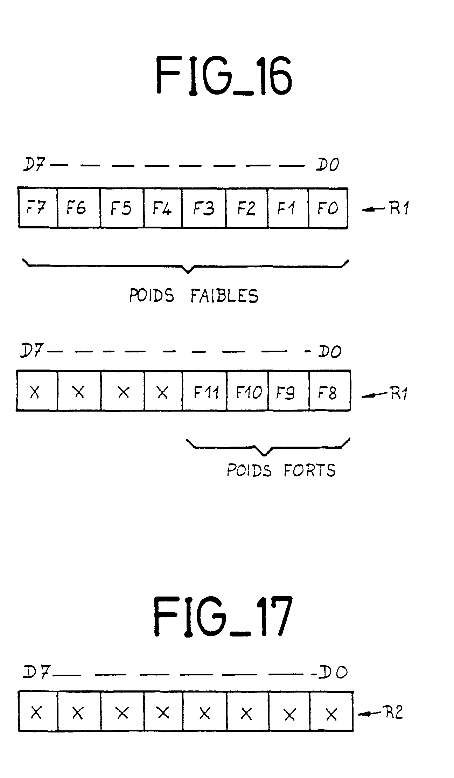

On a représenté sur la figure 16 un exemple de mot de sortie du fréquencemètre 92. L'information fournie par le fréquencemètre 92 est, pour cet exemple, la valeur de la demi-période T de la tension de sortie du convertisseur, c'est-à-dire pratiquement, le laps de temps séparant deux passages à zéro consecutifs de cette tension de sortie. La résolution de cette information étant de 0,5 microseconde, et la fréquence du circuit oscillant (2, 3) pouvant descendre à environ 300 Hz, il suffit de douze éléments binaires pour définir ce mot. Etant donné que le signal de sortie du fréquencemètre utilisé est défini sur huit éléments binaires, on scinde en deux l'information de période T. Le fréquencemètre présente d'abord sur les cellules D0 à D7 (dans l'ordre de poids croissant des éléments binaires) d'un registre R1 du circuit 88, les éléments F0 à F7 de poids faibles de l'information, puis les éléments de poids forts F8 à F11, ainsi que quatre autres éléments binaires de valeur quelconque, marqués "X", qui ne sont pas pris en compte.

Le circuit 88 comporte un autre registre R2 à huit cellules (figure 17) chargé de recevoir du calculateur central 15 un ordre de mode "fréquencemètre uniquement" et un ordre de première phase de démarrage, et éventuellement un ordre de seconde phase de démarrage (voir ci-dessous explications de la figure 19). Ces ordres pouvant être codés de nombreuses façons différentes, on a mis simplement des "X" dans les cellules D0 à D7 de ce registre.

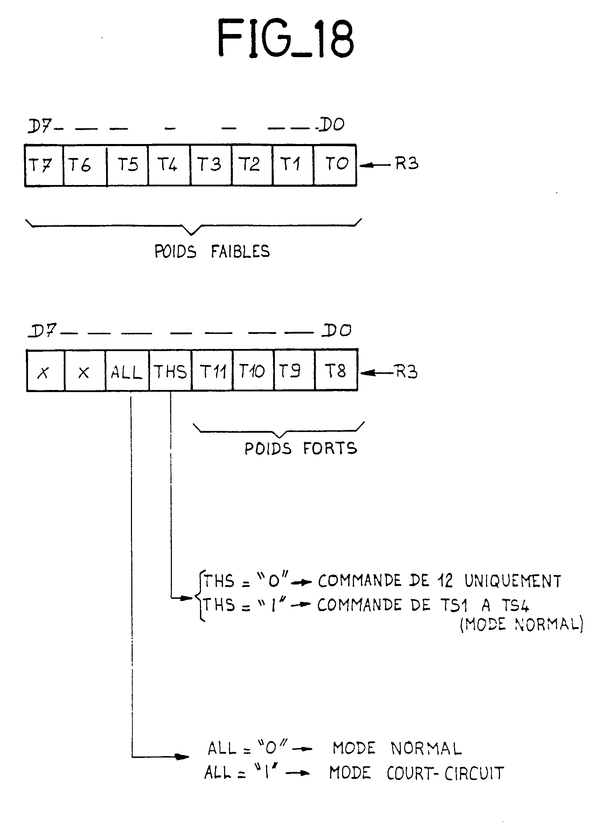

L'indication de la valeur de tpi (ou T-tpi, comme on l'expliquera ci-dessous en référence aux figures 6 et 7), nécessite, comme celle de la valeur de T, douze éléments binaires pour l'exemple de réalisation précité. Cette valeur de tpi (ou T-tpi) transite par un registre R3 du circuit 88 dont on a représenté sur la figure 18 les contenus successifs des cellules D0 à D7. Dans un premier temps, les éléments binaires T0 à T7 de cette valeur sont rangés dans les cellules D0 à

D7, puis dans un second temps les quatre éléments de poids forts T8 à T11. Pendant ce second temps, on envoie également à ce registre R3 une information THS concernant le choix des thyristors à commander (soit le thyristor 12, soit deux des quatre thyristors TS1 à TS4), et une information ALL concernant le mode d'allumage (normal ou court-circuit, c'est-à-dire allumage simultané des thyristors TS1 à TS4). Ces deux dernières informations sont rangées dans les cellules D4 et D5 de R3, les cellules D6 et D7 ne recevant pas d'informations.

Sur le chronogramme de la figure 19, on a représenté, de haut en bas, le signal appliqué sur la gâchette du thyristor 12, le signal appliqué sur les gâchettes des thyristors TS1 à TS4 (les couples de thyristors allumés simultanément sont indiqués "1.2" ou "3.4"), la tension de sortie US du convertisseur pour la première phase seulement, et le signal sur la sortie 61 (passages par zéro de US), pendant la première phase seulement.

Pendant la première phase, entre les instants t0 à t1, qui est une phase de mesure de fréquence uniquement (les thyristors du commutateur ne sont pas allumés), on mesure au moins une fois, et de préférence trois fois, la demi-période T des oscillations de la tension de sortie US, produites par l'envoi, à l'instant t0, d'une impulsion d'allumage sur la gâchette du thyristor 12. Dans le présent exemple, la largeur de cette impulsion est d'environ 12 microsecondes. L'allumage du thyristor 12 le met en court-circuit, ce qui permet au condensateur 11 (chargé par l'alimentation auxiliaire 14 à une tension relativement élevée, par exemple environ 500 V) de se décharger à travers l'inductance 13 dans le circuit de charge (2, 3) qui est un circuit oscillant parallèle, le condensateur 11 constituant avec l'inductance 13 un circuit oscillant série. On choisit la fréquence de résonance de ce circuit oscillant série de préférence supérieure à celle dudit circuit oscillant parallèle, avantageusement 1,25 fois supérieure à la fréquence de résonance maximale du circuit parallèle. Dans un exemple de réalisation, la fréquence de résonance du circuit parallèle peut varier entre 300 Hz et 3 KHz environ, et la fréquence du circuit série est choisie à 4 KHz environ. On constate que la fréquence des oscillations de la tension de sortie correspond pratiquement à la fréquence de résonance du circuit oscillant parallèle (2, 3). Pour obtenir une meilleur précision, on peut effectuer plusieurs, par exemple trois, mesures successives et en calculer la moyenne. Ainsi, sans injecter de puissance dans la charge, on peut finalement connaître la fréquence de résonance du circuit qu'elle forme avec son condensateur parallèle, ce qui est particulièrement avantageux lors de la mise au point de cette charge.

Si l'on veut faire demarrer le convertisseur après cette première phase, on envoie, à un instant t1, une impulsion sur la gâchette du thyristor 12, et simultanément on envoie au moins une impulsion et de préférence trois à cinq impulsions aux gâchettes des thyristors TS1 et TS2, toutes ces impulsions ayant la même largeur, de douze microsecondes pour l'exemple cité. Si l'on envoie une suite de plusieurs impulsions aux thyristors TS1 et TS2, ces impulsions sont séparées par des intervalles égaux à leur largeur. L'intervalle de temps compris entre t0 et t1 doit être suffisamment grand pour permettre l'acquisition de la valeur de la fréquence ainsi mesurée, mais peut être aussi long que l'on veut. Bien entendu, à l'instant t1 le redresseur 4 doit déjà fonctionner.

L'allumage des thyristors TS1 et TS2 tend à faire circuler dans la charge un courant ayant le même sens que le courant initial produit lors de l'allumage du thyristor 12. Etant donné que l'inductance 10 a généralement une valeur élevée, le courant de sortie du redresseur 4 n'augmente que très lentement (voir figures 6 et 7).

Au bout d'un temps t après l'instant t1, à savoir à l'instant t2, on envoie une impulsion d'allumage aux thyristors TS3 et TS4, ce qui inverse le sens du courant de sortie 15 du commutateur 5, la valeur absolue de ce courant continuant à augmenter selon la même loi de variation qu'entre les instants t1 et t2, c'est-à-dire une loi sensiblement exponéntielle. Dans certains cas, on peut envoyer une série de plusieurs impulsions d'amorçage aux thyristors TS3 et TS4, en plus ou au lieu de la série envoyée après t1 aux thyristors TS1 et TS2.

Au bout d'un laps de temps sensiblement égal à la demi-période de la tension de sortie US (mesurée par le fréquencemètre 92), à l'instant t3, on envoie une impulsion d'amorçage aux thyristors TS1 et TS2, ce qui inverse le sens du courant de sortie du commutateur 5. Ce processus se poursuit ensuite avec la même alternance d'allumages des thyristors du commutateur, avec une période sensiblement égale à la demi-période T de la tension de sortie US, la valeur de T pouvant être régulièrement surveillée par le calculateur central (signal sur la borne 61).

La valeur du laps de temps t, entre les instants t1 et t2, est déterminée expérimentalement pour assurer un bon démarrage du convertisseur, et on a constaté qu'elle varie avec la fréquence f du circuit oscillant parallèle, selon une loi de variation de la forme indiquée sur la figure 23, que l'on peut exprimer par:

$$t = K1 + K2/f$$

(K1, K2 étant des constantes déterminées expérimentalement).

En pratique, les instants d'amorçage des thyristors TS1 à TS4, à partir de l'instant t3, sont déterminés en fonction des passages par zéro de la tension de sortie US. En effet, lors de chaque inversion du courant de sortie, les thyristors qui étaient précédemment allumés ne peuvent s'éteindre à coup sûr que s'ils sont polarisés négativement pendant un temps déterminé, qui est ledit tpi. Par consequent, l'inversion du courant de sortie doit précéder d'un temps tpi l'inversion de la tension de sortie (passage par zéro) qui sert de référence. Dans la pratique, il peut être plus simple de se référer au passage par zéro précédant l'inversion, c'est-à-dire que l'inversion du courant de sortie est commandée un temps (T - tpi) après un passage par zéro de la tension de sortie (voir figures 6 et 7), T étant la demi-période de cette tension de sortie (que l'on suppose n'avoir pratiquement pas varié par rapport à la valeur qu'elle avait juste avant ce passage par zéro, sinon le calculateur central, qui contrôle en permanence sa valeur, réajuste le temps (T - tpi) pour les inversions subséquentes du courant de sortie).

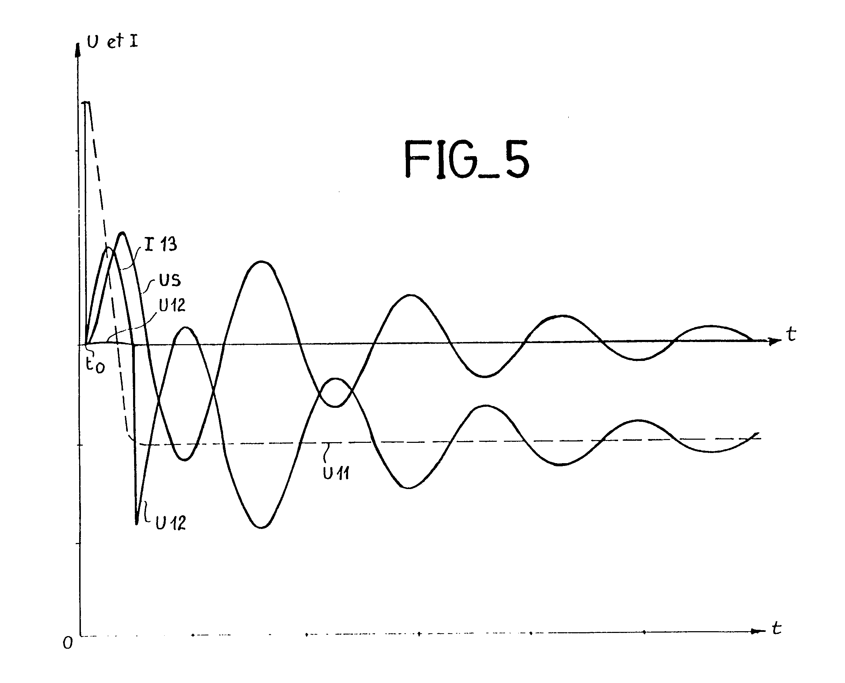

Le chronogramme de la figure 5 se rapporte à la première phase (commençant en t0 sur la figure 19) seule. Sur ce chronogramme, on a représenté les allures de variation de la tension de sortie du convertisseur US, de la tension U12 aux bornes du thyristor 12, de la tension U11 aux bornes du condensateur 11, et du courant I13 dans l'inductance 13. Juste avant l'instant t0, le condensateur 11 est chargé par l'alimentation 14 à une forte tension (par exemple 500 V). En t0, le thyristor 12 est allumé et devient presque un court-circuit. Le courant dans l'inductance 13 commence à croître, de même que la tension de sortie US, tandis que la tension aux bornes du condensateur 11 décroît. A la fin de l'impulsion d'allumage du thyristor 12, la tension aux bornes de la charge ayant une valeur élevée, et celle aux bornes du condensateur ayant fortement diminué, le thyristor se trouve fortement polarisé en inverse et se bloque aussitôt. La tension aux bornes du thyristor 12 devient alors brusquement négative, la tension aux bornes du condensateur 11, qui venait de devenir négative (du fait que la tension aux bornes de la charge avait augmenté), se stabilise à une valeur négative, tandis que la tension aux bornes de la charge se met à osciller autour d'une valeur moyenne nulle, avec une décroissance de forme exponentielle, et que la tension aux bornes du thyristor 12 se met également à osciller, autour d'une valeur moyenne égale à la tension négative stabilisée aux bornes du condensateur 11, avec une décroissance également exponentielle. Ensuite, la tension U11 remonte à sa valeur initiale avec une pente très faible.

Le chronogramme de la figure 6 se rapporte à la phase de démarrage réel (à partir de l'instant t1 sur la figure 19). A cet instant t1, pour simplifier le dessin, on suppose que l'on n'envoie qu'une seule impulsion d'allumage aux thyristors TS1 et TS2, le redresseur 4 étant déjà en fonctionnement. Ce chronogramme se rapporte au cas où la fréquence propre du circuit de charge est à une valeur relativement élevée (3000 Hz par exemple), la fréquence propre du circuit de démarrage lui étant légèrement supérieure (4000 Hz par exemple).

A l'instant t1, le thyristor 12 étant allumé, le courant dans l'inductance 13 augmente jusqu'à une valeur maximale puis décroît, avec une allure sensiblement semi-sinusoïdale. Le thyristor 12 ne recevant qu'une seule impulsion d'allumage, le courant I13 retombe à une valeur nulle et s'y maintient. Pendant ce temps, l'énergie fournie par le condensateur 11 est transmise à la charge (2, 3) qui amorce un processus oscillatoire, la première demi-période de la tension US aux bornes de la charge ayant une durée légèrement supérieure à la durée de la semi-sinusoïde de courant I13.

Au bout d'un temps t, (environ 85 microsecondes par exemple cité), le calculateur 15 envoie une impulsion d'allumage aux thyristors TS3 et TS4 (instant t2), ce qui inverse le sens du courant IS fourni par le commutateur à la charge. Cet instant t2 est, bien entendu, antérieur au premier passage par zéro de la tension US, ce qui polarise négativement les thyristors TS1 et TS2 dont l'extinction est ainsi assurée. Le courant IS continue à croître, en valeur absolue, selon la même loi que précédemment.

A un instant t3, se produisant un temps tpi (environ 35 microsecondes pour l'exemple cité), avant le passage à zéro suivant de la tension US, le calculateur envoie une impulsion d'allumage aux thyristors TS1 et TS2, ce qui inverse à nouveau le sens du courant IS. Comme précisé ci-dessus, l'instant t3 peut être déterminé de deux façons: soit, si on sait à quel moment se produira le prochain passage par zéro de US, l'instant t3 sera situé un temps tpi avant ce prochain passage, soit, en prenant le dernier passage par zéro de US comme point de départ, on attend un temps (T - tpi) pour envoyer une impulsion d'allumage.

En poursuivant ce processus d'allumages alternés de (TS1, TS2) et (TS3, TS4), on constate que le courant IS augmente, en valeur absolue, jusqu'à une valeur à laquelle il se stabilise, et la tension US diminue jusqu'à une valeur stable, en supposant que les paramètres de la charge ne varient pas. Ce régime stable peut être obtenu, pour les valeurs de fréquences prises en exemple, en quelques millisecondes.

Le chronogramme de la figure 7, analogue à celui de la figure 6, se rapporte au cas où la fréquence propre du circuit de charge a une valeur relativement basse (300 Hz environ), alors que la fréquence propre du circuit série de démarrage a la même valeur relativement élevée (4000 Hz environ). Le processus de démarrage est identique à celui du cas illustré sur la figure 6, mais les valeurs de t et de tpi sont très différentes pour l'exemple cité, le temps t passe à 380 microsecondes environ, et tpi à 350 microsecondes environ. La fréquence propre du circuit série étant nettement supérieure à celle du circuit parallèle, la durée d'apparition du courant I13 est nettement inférieure à la demi-période de la tension US. Le point de rebroussement C que l'on constate dans la courbe du courant IS est le reflet d'un point de rebroussement du courant traversant l'inductance 10 (ce courant présente des ondulations ayant la forme d'une succession de demi-sinusoïdales de même sens, dont les points de jonction sont des points de rebroussement). Si la fréquence propre du circuit de charge variait entre 1 et 10 KHz environ, celle du circuit de démarrage serait d'environ 12 à 14 KHz.

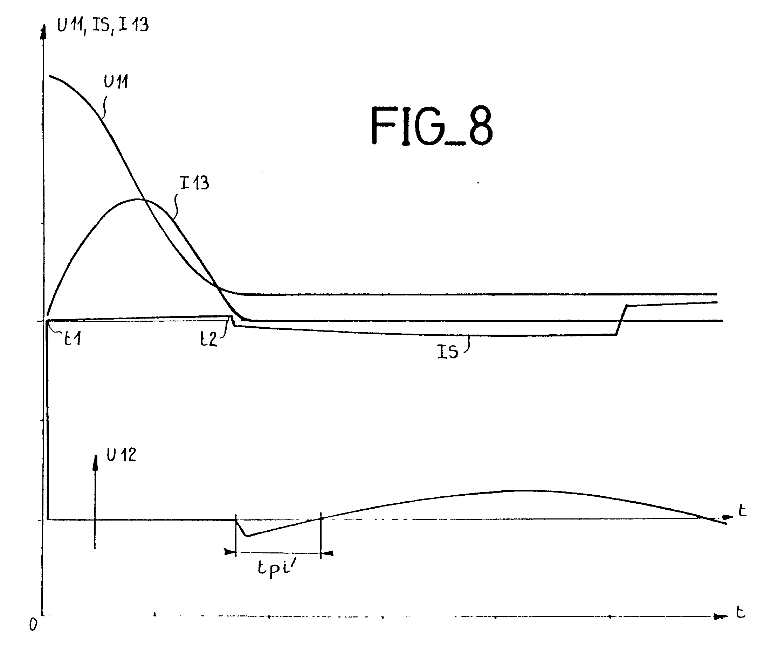

Le chronogramme de la figure 8 se rapporte à un cas similaire à celui de la figure 6, avec dilatation de l'échelle des temps, pour pouvoir représenter la tension U12 aux bornes du thyristor 12 lors de son blocage. A l'instant t2, le courant IS étant inversé, la tension U12, qui était quasiment nulle jusque-là, devient légèrement négative (différence entre les tensions US et U11), puis passe à zéro au bout d'un temps tpi', pour croître et décroître au rythme des oscillations de la tension US. Le temps tpi' est le temps de polarisation inverse du thyristor 12, et du fait qu'il est relativement court (une quarantaine de microsecondes pour l'exemple illustré par le dessin), le thyristor 12 doit être choisi très rapide pour pouvoir être bloqué avant la fin de tpi'.

Les diagrammes des figures 20 et 21 se rapportent à une utilisation en mode court-circuit des thyristors du commutateur 5. Un tel mode peut par exemple être imposé lors d'une surtension de sortie du commutateur. La figure 20 représente le cas d'allumage le plus fréquent où les quatre thyristors TS1 à TS4 sont allumés bien après un allumage normal du couple (1.2). La demande de court-circuit est le signal référencé "ALL" sur la figure 18. La ligne "commande gates" est le signal envoyé aux gâchettes des thyristors concernés du commutateur 5. La figure 21 représente une mise en court-circuit alors que les transformateurs d'allumage de TS1 à TS2 sont en train de se démagnétiser. Les quatre thyristors du commutateur sont allumés simultanément aussitôt après la fin du laps de temps accordé auxdits transformateurs pour se démagnétiser (douze microsecondes pour une impulsion d'allumage de douze microsecondes).

Enfin, à la figure 22, on a représenté le fonctionnement du compteur 95 utilisé en décompteur. A la première ligne, on a représenté le contenu V du registre recevant la valeur de tpi déterminée par le calculateur central 15. Si ce contenu change et devient V', par suite de la détection par le calculateur d'une variation de la fréquence propre de la charge, ce changement est pris en compte au prochain passage par zéro du compteur 95, et la fréquence d'envoi des impulsions de commande aux gâchettes thyristors (TS1, TS2) et (TS3, TS4) est modifiée en conséquence à la suite de cette prise en compte.

Le convertisseur de l'invention n'est pas obligatoirement utilisé avec une charge constituée par un circuit résonant. On peut par exemple utiliser à la place de ce circuit de charge un circuit redresseur alimentant en courant continu une charge quelconque dans ce cas, la fréquence du courant de sortie du commutateur est avantageusement nettement plus élevée (plusieurs ordres de grandeur) que celle du réseau d'alimentation, ce qui permet d'ameliorer nettement la forme d'onde du courant prélevé au réseau avec un circuit de filtrage à bas prix de revient.

## Revendications

1. Convertisseur de fréquence statique de puissance, du type comprenant un pont redresseur (4) à semi-conducteurs commandés, relié par une inductance (10) à un commutateur (5) à semi-conducteurs commandes en montage en pont alimentant une charge constituée par un circuit résonant (2, 3), des dispositifs de mesure de la tension de sortie (TM3), du courant de sortie (TM4), du temps de polarisation inverse des redresseurs commandés du commutateur (8), de mesure du courant fourni par le redresseur (5), et un dispositif de détection (16) des passages par zéro de la tension du secteur d'alimentation du convertisseur, ainsi qu'un circuit de démarrage (6) et un calculateur central (15) relié par des interfaces (17, 18, 20) aux électrodes de commande des redresseurs commandés du redresseur et du commutateur et un circuit de traitement, caractérisé par le fait que le dispositif de mesure du temps de polarisation inverse des redresseurs commandés du commutateur est relié à l'entrée du commutateur et produit des signaux correspondant à la partie négative des impulsions qu'il reçoit (fig. 9).

2. Convertisseur de fréquence selon la revendication 1, caractérisé par le fait que le circuit de traitement comprend un détecteur de valeur de crête (55) dont l'entrée est reliée à la sortie du dispositif (TM3) de mesure de tension de sortie et dont la sortie est reliée via un filtre passe-bas (58) à une première sortie (60) du circuit de traitement un détecteur de passages par zéro (56) dont l'entrée est reliée à la sortie dudit dispositif de mesure des tensions de sortie et dont la sortie est reliée à une seconde sortie (61) du circuit de traitement un circuit multiplicateur (57) dont une première entrée est reliée à la sortie dudit dispositif de mesure de tension de sortie, dont une seconde entrée est reliée à la sortie du dispositif de mesure de courant de sortie, et dont la sortie est reliée, via un dispositif de filtrage passe-bas (62, 63), à une troisième sortie (64) du circuit de traitement, ainsi qu'à l'entrée de dividende d'un diviseur (67) dont la sortie est reliée à une quatrième sortie (68) du circuit de traitement, et dont l'entrée de diviseur est reliée à la sortie d'un élévateur au carré (66), la sortie du dispositif (5) de mesure du courant fourni par le redresseur étant reliée par un filtre (65) passe-bas à l'entrée de cet élévateur au carré et à une cinquième sortie (69) du circuit de traitement lesdites sorties du circuit de traitement étant reliées, le cas échéant via des dispositifs de numérisation, au calculateur central.

3. Convertisseur de fréquence selon la revendication 1 ou 2, caractérisé par le fait que le dispositif de mesure du temps de polarisation inverse des redresseurs commandés du commutateur comporte un redresseur rapide (43) disposé en série avec l'enroulement primaire d'un transformteur d'impulsions (44) et une resistance de protection (45) entre les bornes de sortie (46, 47) du redresseur commandé (4), le secondaire du transformateur d'impulsions étant relié, via un amplificateur opérationnel et un circuit de mise en forme et de comptage (70) à une entrée d'un comparateur (71) recevant sur son autre entrée la valeur minimale du temps de polarisation inverse calculée par le calculateur central, la sortie du comparateur étant reliée au calculateur central.

4. Convertisseur de fréquence selon l'une des revendications 2 ou 3, caractérisé par le fait que le dispositif de filtrage (62, 63) disposé à la sortie du circuit multiplicateur comporte deux filtres en cascade, la fréquence de coupure du premier étant supérieure à celle du second.

5. Convertisseur de fréquence selon la revendication 4, relié à un réseau d'alimentation triphasé à 50 ou 60 Hz, et dont le redresseur est un pont triphasé, caractérisé par le fait que la fréquence de coupure du premier filtre est d'environ 1000 Hz, et celle du second d'environ 200 Hz, ces filtres étant du type à capacités commutées.

6. Convertisseur de fréquence selon l'une des revendications 3 à 5, caractérisé par le fait qu'en parallèle sur l'enroulement primaire du transformateur d'impulsions (44) on dispose une diode (48) montée en sens passant, en série avec une résistance (49), la diode étant en parallèle avec un condensateur de protection (50), et que l'enroulement secondaire de ce transformateur est relié à l'amplificateur (52) par une diode montée en sens bloquant (51), un circuit parallèle comprenant un condensateur (53) et une résistance (54) étant branché à l'entrée de l'amplificateur.

7. Convertisseur de fréquence selon l'une des revendications précédentes, caractérisé par le fait que le calculateur central envoie des impulsions d'allumage à chaque couple de thyristors du commutateur un temps tpi avant le prochain passage par zéro de la tension aux bornes de la charge, ou bien un temps T - tpi après le dernier passage par zéro de cette tension, tpi étant le temps de polarisation inverse imposé aux thyristors par le calculateur en fonction de la frequence de la tension aux bornes de la charge, ce temps étant déterminé par le calculateur d'après une table de conversion établie expérimentalement et qu'il possède en mémoire, et T étant la demi-période de la tension aux bornes de la charge.

8. Convertisseur de fréquence selon l'une quelconque des revendications précédentes, caractérisé par le fait que le circuit de démarrage (6) est relié au commutateur (5), et comporte un circuit résonant (11, 13) disposé en série avec un redresseur commandé (12) contrôlé par le calculateur central, le condensateur (11) de ce circuit résonant étant alimenté par un circuit d'alimentation auxiliaire (14).

9. Convertisseur de fréquence selon la revendication 8, caractérisé par le fait que la fréquence propre du circuit résonant du circuit de démarrage est égale ou supérieure à celle du circuit résonant de charge.

10. Convertisseur de fréquence selon la revendication 9, caractérisé par le fait que, la fréquence propre du circuit de charge pouvant varier entre 300 Hz et (3 KHz, la fréquence propre du circuit resonant du circuit de démarrage est d'environ 4 KHz.

11. Convertisseur de fréquence selon la revendication 9, caractérisé par le fait que, la fréquence propre du circuit de charge pouvant varier entre 1 et 10 KHz, la fréquence propre du circuit résonant du circuit de démarrage est d'environ 12 à 14 KHz.

12. Convertisseur de fréquence selon l'une des revendications 8 à 11, caractérisé par le fait que l'un des circuits résonants étant un circuit résonant parallèle, l'autre est un circuit résonant série.

13. Convertisseur de fréquence selon l'une des revendications 8 à 12, caractérisé par le fait que sans mettre en fonctionnement son redresseur (4), le calculateur envoie une impulsion d'allumage au redresseur commandé (12) du circuit de démarrage, et qu'il mesure la fréquence la demi-période (T) des oscillations amorties provoquées aux bornes de la charge par la décharge du condensateur (11) du circuit oscillant du circuit de démarrage.

14. Convertisseur de fréquence selon l'une des revendications 8 à 13, caractérisé par le fait qu'à l'instant du démarrage du convertisseur (t1), le redresseur étant en fonctionnement, le calculateur central (15) envoie une impulsion d'allumage au redresseur commandé du circuit de démarrage, et au moins une impulsion d'allumage à l'un des couples de thyristors (TS1 - TS2) du commutateur, et qu'un temps (t) après cet insant de démarrage, le calculateur envoie (t2) à l'autre couple de thyristors (TS3 - TS4) du commutateur au moins une impulsion d'allumage, le temps (t) étant déterminé par le calculateur d'après une table de conversion établie expérimentalement et qu'il possède en mémoire, les allumages alternés subséquents des thyristors du com mutateur étant commandes en fonction des instants de passage par zéro de la tension aux bornes de la charge avec chaque fois une avance égale audit tpi déterminé par le calculateur central.

15. Convertisseur de fréquence selon l'une quelconque des revendications 2 à 14, caractérisé par le fait que lorsque la valeur de la résistance équivalente du circuit de charge, disponible sur ladite quatrième sortie (68) du circuit de traitement, descend en-dessous d'une valeur limite, le calculateur central choisit une valeur de tpi supérieure à celle qui devrait être normalement utilisée.

16. Convertisseur de fréquence selon l'une des revendications 8 à 15, caractérisé par le fait que le circuit d'alimentation auxiliaire (14) comprend un circuit redresseur (26; 32) dont l'entrée est reliée par un transformateur d'isolement (25; 31) au réseau d'alimentation du convertisseur, et dont la sortie est reliée au condensateur (11) du circuit de démarrage par un circuit de lissage (27 à 29 ou 33 à 40).

17. Convertisseur de fréquence selon l'une des revendications 8 à 15, caractérisé par le fait que le circuit d'alimentation auxiliaire comprend un circuit redresseur (42) dont l'entrée est directement reliée au réseau d'alimentation du convertisseur, et dont la sortie est reliée par un circuit de lissage (33' à 40') au condensateur du circuit de démarrage.

**Patentansprüche**

1. Statischer Leistungsfrequenzumformer der Bauart, die umfaßt: eine Gleichrichter-Brückenschaltung (4) mit gesteuerten Kalbleiterelementen, die über eine Spule (10) mit einem Schalter (5) verbunden ist, der gesteuerte Halbleiterelemente in einer Bruckenschaltung umfaßt, welche eine von einer Resonanzschaltung (2, 3) gebildete Last versorgt, Einrichtungen zum Messen der Ausgangsspannung (TM3), des Ausgangsstromes (TM4), der Umspannzeit der gesteuerten Gleichrichter des Schalters (5) und des von dem Gleichrichter (4) abgegebenen Stromes und eine Einrichtung (16) zum Erfassen des Nulldurchgangs der Spannung an den den Umformer versorgenden Einrichtungen, zusammen mit einer Startschaltung (6) und einem zentralen digitalen Prozessor (15), der selbst mittels Interfaces (17, 18, 20) mit Steuerelektroden der gesteuerten Gleichrichterelemente des Gleichrichters und des Schalters und einer Verarbeitungsschaltung verbunden ist, dadurch gekennzeichnet, daß die Einrichtung zum Messen der Umspannzeit mit dem Eingangsanschluß des Schalters verbunden ist und dem negativen Abschnitt der empfangenen Impulse entsprechende Signale erzeugt.

2. Leistungsfrequenzumformer nach Anspruch 1, dadurch gekennzechnet, daß die Verarbeitungsschaltung umfaßt: einen Spitzenwertdetektor (55), dessen Eingangsanschluß mit dem Ausgangsanschluß der Einrichtung (TM3) zum Messen der Ausgangsspannung und dessen Ausgangsanschluß über ein Tiefpaßfilter (58) mit einem ersten Ausgangsanschluß (60) der Verarbeitungsschaltung verbunden ist; einen Nulldurchgangsdetektor (56), dessen Eingangsanschluß mit dem Ausgangsanschluß der Einrichtung zum Messen der Ausgangsspannung und dessen Ausgangsanschluß mit einem zweiten Ausgangsanschluß (61) der Verarbeitungsschaltung verbunden ist; einen Multiplizierer (57), dessen erster Eingangsanschluß mit dem Ausgangsanschluß der Einrichtung zum Messen der Ausgangsspannung, dessen zweiter Eingangsanschluß mit dem Ausgangsanschluß der Einrichtung zum Messen des Ausgangsstromes und dessen Ausgangsanschluß über ein Tiefpaßfilter (62, 63) mit einem dritten Ausgangsanschluß (64) der Verarbeitungsschaltung sowie mit dem Dividenden-Eingangsanschluß eines Dividierers (67) verbunden sind, dessen Ausgangsanschluß mit einem vierten Ausgangsanschluß (68) der Verarbeitungsschaltung und dessen Divisor-Eingangsanschluß mit dem Ausgangsanschluß einer Quadriereinrichtung (66) verbunden sind, wobei der Ausgangsanschluß der Einrichtung (5), welche den von dem Gleichrichter abgegebenen Strom mißt, mittels eines Tiefpaßfilters (65) mit dem Eingangsanschluß der Quadriereinrichtung und einem fünften Ausgangsanschluß (69) der verarbeitungsschaltung verbunden ist; wobei die Ausgangsanschlüsse der Verarbeitungsschaltung, falls erforderlich, über Digitalisierschaltungen mit der zentralen Verarbeitungseinheit verbunden sind.

3. Leistungsfrequenzumformer nach Anspruch 1 oder 2, dadurch gekennzechnet, daß die Einrichtung zum Messen der Umspannzeit der gesteuerten Gleichrichterelemente des Schalters einen Hochgeschwindigkeits-Gleichrichter (43), der in Serie mit der Primärwicklung eines Impuls-Transformators (44) verbunden ist, und einen Schutzwiderstand (45) zwischen den Ausgangsanschlüssen (46, 47) des gesteuerten Gleichrichters (4) umfaßt, wobei die Sekundärwicklung des Impulstransformators über einen Operationsverstärker und einen Form- und Zählschaltkreis (70) mit einem Eingangsanschluß eines Komparators (71) verbunden ist, der an seinem anderen Eingangsanschluß den Minimalwert der Umspannzeit empfängt, welche mittels des Zentralprozessors berechnet ist, wobei der Ausgangsanschluß des Komparators mit dem Zentralprozessor verbunden ist.

4. Leistungsfrequenzumformer nach Anspruch 2 oder 3, dadurch gekennzeichnet, daß die an dem Ausgangsanschluß des Multiplizierers angeordnete Filterschaltung (62, 63) zwei in Kaskade geschaltete Filter umfaßt, wobei die Abschaltfrequenz des ersten Filters höher als diejenige des zweiten Filters ist.

5. Leistungsfrequenzumformer nach Anspruch 4, der mit einer Dreiphasen-Energieversorgung mit 50 oder 60 Kz verbunden ist und dessen Gleichrichter eine Dreiphasen-Brücke ist, dadurch gekennzeichnet, daß die Abschaltfrequenz des ersten Filters ca. 1000 Kz und diejenige des zweiten Filters ca. 200 Kz betragen, wobei die Filter von der Bauart mit geschalteten Kapazitäten sind.

6. Leistungsfrequenzumformer nach einem der Ansprüche 3 bis 5, dadurch gekennzeichnet, daß parallel zu der Primärwicklung des Impulstransformators (44) eine Diode (48) liegt, die in Vorwärtsrichtung in Serie mit einem Widerstand (49) verbunden ist, wobei die Diode parallel zu einem Schutzkondensator (50) liegt, und daß die Sekundärwicklung des Transformators mittels einer Diode (51) mit dem Operationsverstärker (52) verbunden ist, die in Sperrichtung angeschlossen ist, wobei an den Eingangsanschlüssen des Operationsverstärkers eine Parallelschaltung eines Kondensators (53) und eines Widerstandes (54) liegt.

7. Leistungsfrequenzumformer nach einem der vorangehenden Ansprüche, dadurch gekennzeichnet, daß der Zentralprozessor Zündimpulse an jedes Thyristorpaar des Schalters zu einer Zeit tpi, bevor der nächste Nulldurchgang der Spannung über der Last erfolgt, oder zu einer Zeit T - tpi nach dem letzten Nulldurchgang dieser Spannung abgibt, wobei tpi die Umspannzeit ist, die den Tyristoren mittels des Prozessors als eine Funktion der Frequenz der Spannung über der Last aufgegeben wird und diese Zeitspanne von dem Prozessor entsprechend einer Umsetztabelle bestimmt wird, die experimentell ermittelt und gespeichert ist, und wobei T die Hälfte der Periode der Spannung über der Last ist.

8. Leistungsfrequenzumformer nach einem der vorangehenden Ansprüche, dadurch gekennzeichnet, daß eine Startschaltung (6) mit dem Schalter (5) verbunden ist und eine Resonanzschaltung (11, 13) umfaßt, die in Serie mit einem von dem Zentralprozessor gesteuerten Gleichrichter (12) liegt, wobei der Kondensator (11) der Resonanzschaltung von einer Hilfsenergieversorgung (14) versorgt ist.

9. Leistungsfrequenzumformer nach Anspruch 8, dadurch gekennzeichnet, daß die Eigenfrequenz der Resonanzschaltung der Startschaltung derjenigen der Lastresonanzschaltung gleich oder größer ist.

10. Leistungsfrequenzumformer nach Anspruch 9, dadurch gekennzeichnet, daß bei einer zwischen 300 Hz und 3 KHz variierbaren Eigenfrequenz der Lastschaltung die Eigenfrequenz der Resonanzschaltung der Startschaltung ca. 4 KKz beträgt.

11. Leistungsfrequenzumformer nach Anspruch 9, dadurch gekennzeichnet, daß bei einer zwischen 1 und 10 KHz variierbaren Eigenfrequenz der Lastschaltung die Eigenfrequenz der Resonanzschaltung der Startschaltung ca. 12 bis 14 KHz beträgt.

12. Leistungsfrequenzumformer nach einem der Ansprüche 8 bis 11, dadurch gekennzeichnet, daß dann, wenn eine der Resonanzschaltungen eine Parallelresonanzschaltung ist, die andere eine Serienresonanzschaltung ist.

13. Leistungsfrequenzumformer nach einem der Ansprüche 8 bis 12, dadurch gekennzeichnet, daß der Prozessor einen Zündimpuls an den gesteuerten Gleichrichter (12) der Startschaltung gibt, ohne seinen Gleichrichter (4) in Betrieb zu setzen, und daß er die Frequenz der halben Periode (T) der an dem Anschluß der Last durch Entladen des Kondensators (11) des Schwingkreises der Startschaltung auftretenden gedämpf ten Schwingung mißt.

14. Leistungsfrequenzumformer nach einem der Ansprüche 8 bis 13, dadurch gekennzeichnet, daß beim Starten des Umsetzers (t1), während der Gleichrichter in Betrieb ist, der Zentralprozessor (15) einen Zündimpuls an den gesteuerten Gleichrichter der Startschaltung und mindestens einen Zündimpuls an einen der Thyristorpaare (TS1 - TS2) des Schalters sendet und daß eine Zeitspanne (t) nach diesem Startzeitpunkt der Prozessor an das andere Thyristorpaar (TS3 - TS4) des Schalters mindestens einen Zündimpuls sendet (t2), wobei die Zeitspanne (t) von dem Prozessor aus einer Wandlungstabelle bestimmt ist, die experimentell ermittelt und gespeichert ist, wobei die aufeinanderfolgende abwechselnde Zündung der Thyristoren des Schalters als eine Funktion des Nulldurchgangs der Spannung an den Anschlüssen der Last jeweils um eine Zeitspanne voreilend geregelt ist, welche gleich der mittels des Zentralprozessors bestimmten Zeitspanne tpi ist.

15. Leistungsfrequenzumformer nach einem der Ansprüche 2 bis 14, dadurch gekennzeichnet, daß dann, wenn der Wert des Äquivalenzwiderstandes der Lastschaltung, der an dem vierten Ausgangsanschluß (68) der Verarbeitungsschaltung gewonnen werden kann, unter einen Grenzwert fällt, der Zentralprozessor einen Wert für tpi wählt, der großer ist als derjenige, der normalerweise verwendet worden wäre.

16. Leistungsfrequenzumformer nach einem der Ansprüche 8 bis 15, dadurch gekennzeichnet, daß die Hilfsenergieversorgung (14) eine Gleichrichterschaltung (26; 32) umfaßt, deren Eingangsanschluß mittels eines Trenntransformators (25; 31) mit der Energieversorgungsschaltung des Umsetzers und deren Ausgangsanschluß mit dem Kondensator (11) der Startschaltung über eine Glättungsschaltung (27 bis 29 oder 33 bis 40) verbunden sind.

17. Leistungsfrequenzumformer nach einem der Ansprüche 8 bis 15, dadurch gekennzeichnet, daß die Hilfsenergieversorgung eine Gleichrichterschaltung (42) umfaßt, deren Eingangsanschluß direkt mit der Energieversorgung des Umsetzers und deren Ausgangsanschluß über eine Glättungsschaltung (33' bis 40') mit dem Kondensator der Startschaltung verbunden sind.

**Claims**

1. A static power frequency converter, of the type comprising a rectifier bridge (4) comprising controlled semiconductors, connected by an inductance (10) to a switch (5) comprising controlled semiconductors in a bridge connection feeding a load constituted by a resonant circuit (2, 3), devices for measuring the output voltage (TM3), the output current (TM4), the reverse bias time of the controlled rectifiers of the switch (8), the current supplied by the rectifier (5) and a device (16) for detecting the zero crossing of the voltage of the mains supplying the converter, together with a starting circuit (6) and a central digital processor (15), itself connected by interfaces (17, 18, 20) to the control electrodes of the controlled rectifiers of the rectifier and of the switch and a processing circuit, characterized in that the reverse bias time measuring device is connected to the input of the switch and produces signals corresponding to the negative portion of the received pulses.

2. A frequency converter according to claim 1, characterized in that the processing circuit comprises: a peak value detector (55) whose input is connected to the output of the device (TM3) for measuring the output voltage and whose output is connected via a low pass filter (58) to a first output (60) of the processing circuit; a zero crossing detector (56) whose input is connected to the output of said output voltage measuring device and whose output is connected to a second output (61) of the processing circuit; a multiplying circuit (57), a first input of which is connected to the output of said output voltage measuring device, a second input of which is connected to the output of said output current measuring device and the output of which is connected, via a low pass filtering device (62, 63), to a third output (64) of the processing circuit, as well as to the dividend input of a divider (67) whose output is connected to a fourth output (68) of the processing circuit, and whose divider input is connected to the output of a squaring device (66), the output of the device (5) measuring the current supplied by the rectifier being connected by a low pass filter (65) to the input of said squaring device and to a fifth output (69) of the processing circuit; said outputs of the processing circuit being connected, if required, via digitization devices, to the central processor.

3. A frequency converter according to claim 1 or 2, characterized in that the device for measuring the reverse bias time of the controlled rectifiers of the switch comprises a high speed rectifier (4) disposed in series with the primary winding of a pulse transformer (44) and a protective resistance (45) between the output terminals (46, 47) of the controlled rectifier (4), the secondary of the pulse transformer being connected via an operational amplifier and a shaping and counting circuit (70) to an input of a comparator (71) receiving at its other input the minimum value of the reverse bias time calculated by the central processor, the output of the comparator being connected to the central processor.

4. A frequency converter according to one of claims 2 or 3, characterized in that the filtering device (62, 63) disposed at the output of the multiplying circuit comprises two cascade connected filters, the turn off frequency of the first one being higher than that of the second.

5. A frequency converter according to claim 4, connected to a three phase so or 60 Hz power supply network and whose rectifier is a three phase brige, characterized in that the turn off frequency of the first filter is about 1000 Hz and that of the second about 200 Hz, these filters being of the switched capacity type.

6. A frequency converter according to any of claims 3 to 5, characterized in that in parallel across the primary winding of the pulse transformer (44) there is disposed a diode (48) connected in the forward direction in series with a resistor (49), the diode being in parallel across a protective capacitor (50), and that the secondary winding of said transformer is connected to the amplifier (52) by a diode (51) connected in the blocking direction, a parallel circuit comprising a capacitor (53) and a resistor (54) being connected to the input of the amplifier.

7. A frequency converter according to any of the preceding claims, characterized in that the central processor sends firing pulses to each thyristor pair of the switch at a time tpi before the next zero crossing of the voltage across the load, or else at a time T - tpi after the last zero crossing of this voltage, tpi being the reverse bias time imposed on the thyristors by the processor as a function of the frequency of the voltage across the load, this time being determined by the processor according to a conversion table established experimentally and which it stores in memory, and T being the half period of the voltage across the load.

8. A frequency converter according to any of the preceding claims, characterized in that a starting circuit (6) is connected to the switch (5) and comprises a resonant circuit (11, 13) disposed in series with a controlled rectifier (12) controlled by the central processor, the capacitor (11) of this resonant circuit being fed by an auxiliary power supply circuit (14).

9. A frequency converter according to claim 8, characterized in that the natural frequency of the resonant circuit of the starting circuit is equal to or greater than that of the load resonant circuit.

10. A frequency converter according to claim 9, characterized in that, with the natural frequency of the load circuit variable between 300 Hz and 3 KHz, the natural frequency of the resonant circuit of the starting circuit is about 4 KHz.

11. A frequency converter according to claim 9, characterized in that, with the natural frequency of the load circuit variable between 1 and 10 KHz, the natural frequency of the resonant circuit of the starting circuit is about 12 to 14 KHz.

12. A frequency converter according to any of claims 8 to 11, characterized in that, when one of the resonant circuits is a parallel resonating circuit, the other is a series resonating circuit.

13. A frequency converter according to any of claims 8 to 12 characterized in that, without setting its rectifier (4) in operation, the processor sends a firing pulse to the controlled rectifier (12) of the starting circuit, and that it measures the frequency of the half period (T) of the damped oscillations caused at the terminal of the load by discharge of the capacitor (11) of the oscillating circuit of the starting circuit.

14. A frequency converter according to any of claims 8 to 13, characterized in that, at the time of start up of the converter (t1), with the rectifier in operation, the central processor (15) sends a firing pulse to the controlled rectifier of the starting circuit and at least one firing pulse to one of the thyristor pairs (TS1 - TS2) of the switch, and that a time (t) after this starting time, the processor sends (t2) to the other thyristor pair (TS3 - TS4) of the switch at least one firing pulse, the time (t) being determined by the processor from a conversion table established experimentally and which it has stored in memory, the subsequent alternate firing of the thyristors of the switch being controlled as a function of the zero crossings of the voltage at the terminals of the load with each time an advance equal to said tpi determined by the central processor.

15. A frequency converter according to any of claims 2 to 14, characterized in that, when the value of the equivalent resistance of the load circuit, available at said fourth output (68) of the processing circuit, drops below a limit value, the central processor chooses a value of tpi greater than that which would have been normally used.

16. A frequency converter according to any of claims 8 to 15, characterized in that the auxiliary power supply circuit (14) comprises a rectifier circuit (26; 32) whose input is connected by an isolating transformer (25; 31) to the power supply network of the converter, and whose output is connected to the capacitor (11) of the starting circuit by a smoothing circuit (27 to 29 or 33 to 40).

17. A frequency converter according to any of claims 8 to 15, characterized in that the auxiliary power supply circuit comprises a rectifier circuit (42) whose input is directly connected to the power supply network of the converter, and whose output is connected by a smoothing circuit (33' to 40') to the capacitor of the starting circuit.

FIG_1

FIG_2

FIG_3

DEMARREUR

EP 0 169 142 B1

FIG_4

FIG_5

FIG_6

EP 0 169 142 B1

FIG_7

EP 0 169 142 B1

EP 0 169 142 B1

# FIG_8

# FIG_9

# FIG_10

# FIG_11

# FIG_12

| M | C2 | C1 | C0 | |
|---|----|----|----|---|
| | 0 | 0 | 0 | INDIFFERENT |
| | 0 | 0 | 1 | COUPLE 1.2 |
| | 0 | 1 | 0 | COUPLE 4.5 |
| | 0 | 1 | 1 | COUPLE 2.3 |
| | 1 | 0 | 0 | COUPLE 5.6 |
| | 1 | 0 | 1 | COUPLE 3.4 |
| | 1 | 1 | 0 | COUPLE 6.1 |

"0" = mode normal
"1" = mode roue libre

# FIG_13

# FIG_14

EP 0 169 142 B1

# FIG_15

vers 15

92 — FREQUENCEMETRE

COMPA - RATEUR — 93

← 85

88

94

95 — COMPTEUR

REGISTRE

90

91

89

de 61 →

DECODEUR ADRESSES

GENERATEUR D' IMPULSIONS — 96

97 — AIGUILLAGE

vers 86

vers 12

EP 0 169 142 B1

# FIG_16

$D7 - - - - - - - - DO$

| F7 | F6 | F5 | F4 | F3 | F2 | F1 | FO |
|----|----|----|----|----|----|----|----|

← R1

POIDS FAIBLES

$D7 - - - - - - - - DO$

| X | X | X | X | F11 | F10 | F9 | F8 |
|---|---|---|---|-----|-----|----|----|

← R1

POIDS FORTS

# FIG_17

$D7 - - - - - - - DO$

| X | X | X | X | X | X | X | X |
|---|---|---|---|---|---|---|---|

← R2

# FIG_18

POIDS FAIBLES

POIDS FORTS

THS = "0" → COMMANDE DE 12 UNIQUEMENT
THS = "1" → COMMANDE DE TS1 A TS4
(MODE NORMAL)

ALL = "0" → MODE NORMAL
ALL = "1" → MODE COURT-CIRCUIT

27

# FIG_19

$t_0$　　FIG_19　　$t_1$　　$t_2$　　$t_3$

(12)

(TS1-TS2)
ou(TS3-TS4)

1.2　　t　　3.4　≈T　　1.2　≈T

US

PASSAGES
ZERO

# FIG_20

DEMANDE
COURT-CIRCUIT

12μS　12μS

COMMANDE
GACHETTES　COUPLE 1.2　COUPLES 1.2
et 3.4　} COURT-CIRCUIT

# FIG_21

DEMANDE COURT-CIRCUIT

12 μS　12 μS

COMMANDE GACHETTES

COUPLE 1.2 | COUPLES
12 et 3.4

EP 0 169 142 B1

EP 0 169 142 B1

**FIG_22**

CONTENU REGISTRES

$V$    $V'$

ZERO DECOMPTEUR

PRISE EN COMPTE $tpi$

COMMANDE GACHETTES

1.2    3.4    1.2    3.4    1.2

**FIG_23**

$t$ et $tpi$

$t$

$tpi$

$f$